# EUROPEAN PATENT APPLICATION

(11) **EP 4 730 318 A1**
(43) Date of publication of application: **22.04.2026**
(21) Application number: 25725414.4
(22) Date of filing: 14.05.2025
(51) Int. Cl.: G09G 5/10, G06F 1/16, H04M 1/02

(54) **ELECTRONIC DEVICE INCLUDING FLEXIBLE DISPLAY AND CONTROL METHOD THEREFOR**

(30) Priority: 20.08.2024 KR 20240111041; 08.10.2024 KR 20240136737
(71) Applicant: Samsung Electronics Co., Ltd., Suwon-si, Gyeonggi-do 16677 (KR)
(72) Inventor: JUNG, Songhee, Suwon-si, Gyeonggi-do 16677 (KR); KIM, Hyunmuk, Suwon-si, Gyeonggi-do 16677 (KR); BAE, Hyerim, Suwon-si, Gyeonggi-do 16677 (KR); JANG, Gyudae, Suwon-si, Gyeonggi-do 16677 (KR); JUN, Jaeyoung, Suwon-si, Gyeonggi-do 16677 (KR); CHOI, Sunyong, Suwon-si, Gyeonggi-do 16677 (KR); HONG, Hyunchul, Suwon-si, Gyeonggi-do 16677 (KR); YOON, Byounguk, Suwon-si, Gyeonggi-do 16677 (KR); LEE, Jungwoo, Suwon-si, Gyeonggi-do 16677 (KR); CHOI, Jinwook, Suwon-si, Gyeonggi-do 16677 (KR)
(74) Representative: Nederlandsch Octrooibureau
(86) International application number: PCT/KR2025/006512
(87) International publication number: WO 2026/043009

(57) **Abstract**

An electronic device is disclosed. An electronic device according to the disclosure may comprise a foldable housing including a first housing part, a second housing part, and a third housing part, a flexible display disposed across the first housing part, the second housing part, and the third housing part, a sensor including sensing circuitry configured to detect a change between a folded state, a partially unfolded state, and a fully unfolded state of the foldable housing, at least one processor including a processing circuit, and memory storing instructions. The instructions may, when executed individually or collectively by at least one processor, cause the electronic device to identify, by a sensor, that a folding state is a first state in which a first portion of the flexible display is visually exposed to an outside of the electronic device, and a second portion of the flexible display is not visually exposed to the outside of the electronic device, the second portion being a remaining portion of the flexible display except for the first portion, control a brightness of a first area of the first portion to be a first brightness based on the folding state of the electronic device being the first state to reduce ghosting of the flexible display caused by degradation of the flexible display, deactivate a second area which is at least a partial area of the second portion, control a brightness of a third area disposed between the first area and the second area to be sequentially lowered from a first boundary between the first area and the third area to a second boundary between the third area and the second area, the third area including a 3-1th area extending from the first area and a 3-2th area extending from the 3-1th area to the second area, as part of controlling the brightness of the third area to be sequentially lowered, and control a brightness of the 3-1th area to be sequentially lowered based on a first method from the first boundary to a third boundary between the 3-1th area and the 3-2th area, and control a brightness of the 3-2th area to be sequentially lowered from the third boundary to the second boundary based on a second method different from the first method.

## Description

### [Technical Field]

Embodiments of the disclosure relate to an electronic device including a flexible display and a method for controlling the same.

### [Background Art]

More and more services and additional functions are being provided through electronic devices, e.g., smartphones, or other portable electronic devices. To meet the needs of various users and raise use efficiency of electronic devices, communication service carriers or device manufacturers are jumping into competitions to develop electronic devices with differentiated and diversified functionalities. Accordingly, various functions that are provided through electronic devices are evolving more and more.

Recently, various types of electronic devices are being developed that provide a wider screen through multi-display. For example, an electronic device has multiple displays and provides a wide screen through multi-display.

Electronic devices may have a new form factor, such as multi-display (e.g., dual-display) devices (e.g., foldable devices). A foldable device has a folding (or bending) display (e.g., a foldable display or a flexible display) to be used in a folded or unfolded state. Further, the multi-display implementation leads to increased demand for development of a user interface (UI) corresponding to the multi-display and its operation.

The above-described information may be provided as related art for the purpose of helping understanding of the disclosure. No claim or determination is made as to whether any of the foregoing is applicable as background art in relation to the disclosure.

### [Disclosure of Invention]

### [Solution to Problems]

According to an embodiment, an electronic device may comprise a foldable housing including a first housing part, a second housing part, and a third housing part, a flexible display disposed across the first housing part, the second housing part, and the third housing part, a sensor including sensing circuitry configured to detect a change between a folded state, a partially unfolded state, and a fully unfolded state of the foldable housing, at least one processor including a processing circuit, and memory storing instructions.

According to an embodiment, the instructions may, when executed by the at least one processor individually or collectively, cause the electronic device to, based on detecting a change from the folded state of the foldable housing to the partially unfolded state, control a brightness of a first area of the flexible display to be a first brightness.

According to an embodiment, the instructions may, when executed by the at least one processor individually or collectively, cause the electronic device to, based on detecting a change from the folded state of the foldable housing to the partially unfolded state, deactivate a second area of the flexible display.

According to an embodiment, the instructions may, when executed by the at least one processor individually or collectively, cause the electronic device to control a brightness of a third area disposed between the first area and the second area to be sequentially lowered from a first boundary between the first area and the third area to a second boundary between the third area and the second area.

According to an embodiment, the third area may include a 3-1th area extending from the first area and a 3-2th area extending from the 3-1th area to the second area.

According to an embodiment, the instructions may, when executed by the at least one processor individually or collectively, cause the electronic device to, as part of controlling the brightness of the third area to be sequentially lowered, control the brightness of the 3-1th area to be sequentially lowered based on a first method from the first boundary to a third boundary between the 3-1th area and the 3-2th area.

According to an embodiment, the instructions may, when executed by the at least one processor individually or collectively, cause the electronic device to, as part of controlling the brightness of the third area to be sequentially lowered, control the brightness of the 3-2th area to be sequentially lowered from the third boundary to the second boundary based on a second method different from the first method.

According to an embodiment, a method for controlling an electronic device including a foldable housing including a first housing part, a second housing part, and a third housing part and a flexible display may comprise, based on detecting a change from the folded state of the foldable housing to the partially unfolded state, controlling a brightness of a first area of the flexible display to be a first brightness.

According to an embodiment, the method for controlling the electronic device may comprise, based on detecting a change from the folded state of the foldable housing to the partially unfolded state, deactivating a second area of the flexible display.

According to an embodiment, the method for controlling the electronic device may comprise controlling a brightness of a third area disposed between the first area and the second area to be sequentially lowered from a first boundary between the first area and the third area to a second boundary between the third area and the second area.

According to an embodiment, the third area may include a 3-1th area extending from the first area and a 3-2th area extending from the 3-1th area to the second area.

According to an embodiment, the method for controlling the electronic device may comprise, as part of controlling the brightness of the third area to be sequentially lowered, control the brightness of the 3-1th area to be sequentially lowered based on a first method from the first boundary to a third boundary between the 3-1th area and the 3-2th area.

According to an embodiment, the method for controlling the electronic device may comprise, as part of controlling the brightness of the third area to be sequentially lowered, controlling the brightness of the 3-2th area to be sequentially lowered from the third boundary to the second boundary based on a second method different from the first method.

According to an embodiment, in a non-transitory, computer-readable recording medium storing one or more programs, the one or more programs may include instructions that cause an electronic device, including a foldable housing including a first housing part, a second housing part, and a third housing part and a flexible display, to, based on detecting a change from the folded state of the foldable housing to the partially unfolded state: control a brightness of a first area of the flexible display to be a first brightness.

According to an embodiment, the one or more programs may include instructions that cause the electronic device to, based on detecting a change from the folded state of the foldable housing to the partially unfolded state, deactivate a second area of the flexible display.

According to an embodiment, the one or more programs may include instructions that cause the electronic device to control a brightness of a third area disposed between the first area and the second area to be sequentially lowered from a first boundary between the first area and the third area to a second boundary between the third area and the second area.

According to an embodiment, the third area may include a 3-1th area extending from the first area and a 3-2th area extending from the 3-1th area to the second area.

According to an embodiment, the one or more programs may include instructions that cause the electronic device to, as part of controlling the brightness of the third area to be sequentially lowered, control the brightness of the 3-1th area to be sequentially lowered based on a first method from the first boundary to a third boundary between the 3-1th area and the 3-2th area.

According to an embodiment, the one or more programs may include instructions that cause the electronic device to, as part of controlling the brightness of the third area to be sequentially lowered, control the brightness of the 3-2th area to be sequentially lowered from the third boundary to the second boundary based on a second method different from the first method.

According to an embodiment, in a non-transitory, computer-readable recording medium storing one or more programs, the one or more programs may include instructions that cause an electronic device, including a foldable housing including a first housing part, a second housing part, and a third housing part and a flexible display, to identify a first area where a degradation level may be a set value or more and a second area where the degradation level may be less than the set value, in the flexible display.

According to an embodiment, the one or more programs may include instructions that cause the electronic device to activate the second area based on identifying that a folding state of the electronic device may be a state in which the second area may be deactivated by the sensor.

According to an embodiment, the one or more programs may include instructions that cause the electronic device to drive the second area at a set brightness.

### [Brief Description of Drawings]

FIG. 1 is a block diagram illustrating an electronic device in a network environment according to an embodiment;
FIG. 2A is a perspective view illustrating an unfolded state of an electronic device according to an embodiment;
FIG. 2B is a perspective view illustrating an unfolded state of an electronic device according to an embodiment;
FIG. 3 is a perspective view illustrating a folded state of an electronic device according to an embodiment;
FIG. 4 is a view illustrating a partially folded state of an electronic device according to an embodiment;
FIG. 5 is a view illustrating an electronic device folded in a different manner from those of FIGS. 3 and 4;
FIG. 6 is a view illustrating an electronic device folded in a different manner from those of FIGS. 3 to 5;
FIG. 7A is a view illustrating an active area, a brightness control area, and an inactive area of a flexible display in a state in which a partial area of a flexible display is exposed to the outside as illustrated in FIGS. 4 and 5;
FIG. 7B is a view illustrating an active area, a brightness control area, and an inactive area of a flexible display in a state in which a partial area of a flexible display is exposed to the outside as illustrated in FIGS. 4 and 5;
FIG. 7C is a view illustrating an active area, a brightness control area, and an inactive area of a flexible display in a state in which a partial area of a flexible display is exposed to the outside as illustrated in FIG. 6;
FIG. 7D is a view illustrating an active area, a brightness control area, and an inactive area of a flexible display in a state in which a partial area of a flexible display is exposed to the outside as illustrated in FIG. 6;
FIG. 8 is a flowchart illustrating an operation of adjusting the brightness for each area of a flexible display to reduce ghosting due to degradation of the flexible display in an electronic device according to an embodiment;
FIG. 9A is a view illustrating an operation of adjusting the brightness for each area of a flexible display to reduce ghosting due to degradation of the flexible display in an electronic device according to an embodiment;
FIG. 9B is a view illustrating an operation of adjusting the brightness for a particular area of a flexible display to reduce ghosting due to degradation of the flexible display in an electronic device according to an embodiment;
FIG. 9C is a view illustrating an operation of adjusting the brightness for a particular area of a flexible display to reduce ghosting due to degradation of the flexible display in an electronic device according to an embodiment;
FIG. 10 is a view illustrating an operation of periodically moving a displayed image to reduce ghosting due to degradation of a flexible display in an electronic device according to an embodiment;
FIG. 11 is a view illustrating an operation of driving an area not exposed to the outside of an electronic device to reduce ghosting due to degradation of a flexible display in an electronic device according to an embodiment;
FIG. 12 is a view illustrating an operation of driving an area not exposed to the outside of an electronic device to reduce ghosting due to degradation of a flexible display in an electronic device according to an embodiment;
FIG. 13A is a view illustrating an operation of driving an area not exposed to the outside of an electronic device to reduce ghosting due to degradation of a flexible display in an electronic device according to an embodiment;
FIG. 13B is a view illustrating an operation of driving an area not exposed to the outside of an electronic device to reduce ghosting due to degradation of a flexible display in an electronic device according to an embodiment;
FIG. 14 is a view illustrating an operation of driving an area not exposed to the outside of an electronic device to reduce ghosting due to degradation of a flexible display in an electronic device according to an embodiment;
FIG. 15 is a view illustrating an operation of driving an area not exposed to the outside of an electronic device to reduce ghosting due to degradation of a flexible display in an electronic device according to an embodiment;
FIG. 16 is a view illustrating an operation of driving an area not exposed to the outside of an electronic device to reduce ghosting due to degradation of a flexible display in a state in which an area of the flexible display exposed to the outside of the electronic device is in an inactive state in an electronic device according to an embodiment;
FIG. 17 is a view illustrating an operation of driving an area not exposed to the outside of an electronic device to reduce ghosting due to degradation of a flexible display in a state in which an area of the flexible display exposed to the outside of the electronic device is in an inactive state in an electronic device according to an embodiment;
FIG. 18 is a view illustrating an operation of driving an area not exposed to the outside of an electronic device to reduce ghosting due to degradation of a flexible display in a state in which an area of the flexible display exposed to the outside of the electronic device is in an inactive state in an electronic device according to an embodiment;
FIG. 19 is a view illustrating an operation of driving an area not exposed to the outside of an electronic device to reduce ghosting due to degradation of a flexible display in a state in which an area of the flexible display exposed to the outside of the electronic device is in an active state in an electronic device according to an embodiment;
FIG. 20 is a view illustrating an operation of driving an area not exposed to the outside of an electronic device to reduce ghosting due to degradation of a flexible display in a state in which an area of the flexible display exposed to the outside of the electronic device is in an active state in an electronic device according to an embodiment;
FIG. 21 is a view illustrating an operation of periodically moving an image displayed in an area not exposed to the outside of an electronic device to reduce ghosting due to degradation of a flexible display in an electronic device according to an embodiment;
FIG. 22 is a view illustrating an operation of providing highlight through an area not exposed to the outside of an electronic device to reduce ghosting due to degradation of a flexible display in an electronic device according to an embodiment;
FIG. 23A is a view illustrating an indicator displayed to lead to a fully unfolded state of a flexible display in an electronic device according to an embodiment;
FIG. 23B is a view illustrating a screen processing operation for leading to a fully unfolded state of a flexible display in an electronic device according to an embodiment;
FIG. 24 is a view illustrating an operation of varying luminance depending on a degree of degradation for each area to reduce ghosting due to degradation of a flexible display in an electronic device according to an embodiment;
FIG. 25 is a view illustrating an indicator displayed to lead to a fully unfolded state of a flexible display in an electronic device according to an embodiment;
FIG. 26 is a view illustrating an operation of varying luminance depending on a degree of degradation for each area to reduce ghosting due to degradation of a flexible display in an electronic device according to an embodiment;
FIG. 27 is a view illustrating an operation of periodically moving a boundary between an active area and an inactive area of an area to reduce ghosting due to degradation of a flexible display in an electronic device according to an embodiment;
FIG. 28 is a view illustrating an operation of adjusting a gradation range applied to a flexible display to reduce ghosting due to degradation of the flexible display in an electronic device according to an embodiment;
FIG. 29 is a view illustrating an operation of adjusting the brightness for each area of a flexible display to reduce ghosting due to degradation of the flexible display when an electronic device is a rollable electronic device according to an embodiment;
FIG. 30A is a view illustrating an operation of adjusting the brightness for each area of a flexible display to reduce ghosting due to degradation of the flexible display when an electronic device is a bendable electronic device according to an embodiment; and
FIG. 30B is a view illustrating an operation of adjusting the brightness for each area of a flexible display to reduce ghosting due to degradation of the flexible display when an electronic device is a bendable electronic device according to an embodiment.

The person skilled in the art will understand that the features described above and/or below may be combined in any way deemed useful. The drawings of the present disclosure show examples/embodiments of the invention, which will be described in detail hereinafter. It is to be understood that one or more of elements / components shown and/or described in one or more of these examples/embodiments and not in others may be used in those others too unless mechanical or other limitations prevent such an implementation. Moreover, describing features of different examples/embodiments in a single passage does not automatically mean that those features are inextricably linked. They may be applied separately from one another.

### [Mode for the Invention]

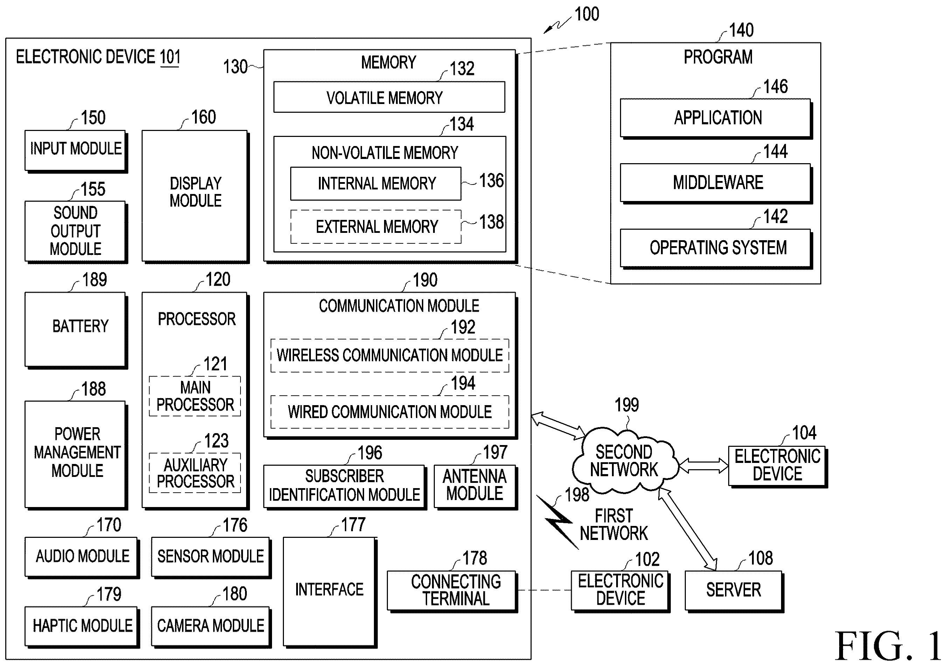

FIG. 1 is a block diagram illustrating an electronic device 101 in a network environment 100 according to an embodiment. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mm Wave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

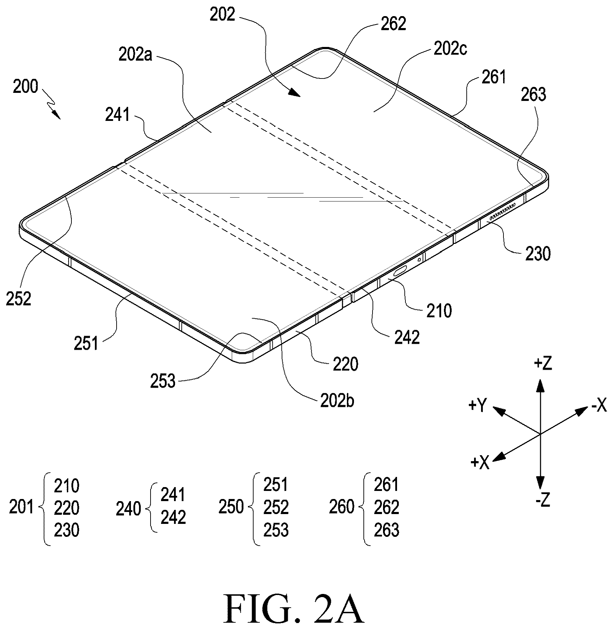

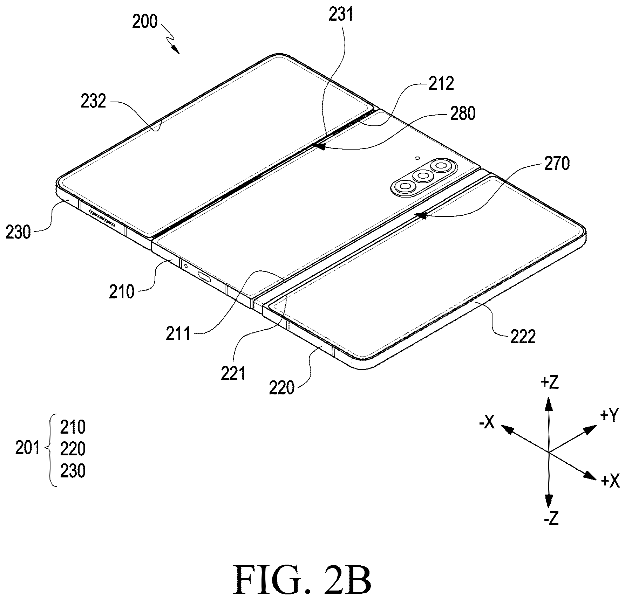

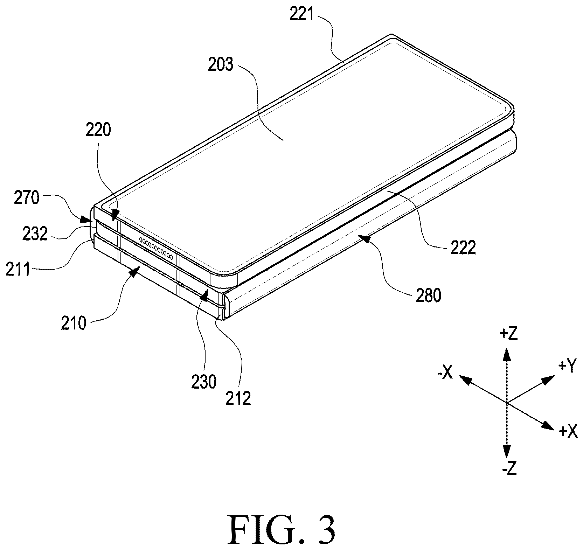

FIG. 2A is a perspective view illustrating an unfolded state of an electronic device 200 according to an embodiment of the disclosure. FIG. 2B is a perspective view illustrating an unfolded state of an electronic device 200 according to an embodiment of the disclosure. FIG. 2A may be a view of one side surface (e.g., front surface) of the electronic device 200 as obliquely viewed. FIG. 2B may be a view of the other side surface (e.g., rear surface) of the electronic device 200 as obliquely viewed. The components described with reference to FIGS. 2A and 2B may be identical in whole or part to the components described with reference to FIG. 1. Some or all of the components described with reference to FIGS. 2A and 2B may be the same as all or some of the components described with reference to FIGS. 3 to 30B.

According to an embodiment, the electronic device 200 may include a housing 201. The electronic device 200 may include a display 202. The housing 201 may form a space where the display 202 is disposed. The display 202 may be a flexible display. At least a portion of the display 202 may be folded or unfolded.

According to an embodiment, the housing 201 may include a first housing 210. The housing 201 may include a second housing 220. The housing 201 may include a third housing 230. The first housing 210 may be disposed between the second housing 220 and the third housing 230. The second housing 220 may be rotatably coupled to the first housing 210. The third housing 230 may be rotatably coupled to the first housing 210. The display 202 may be exposed through a first portion of the first housing 210, a second portion of the second housing 220, and a third portion of the third housing 230; in other words, the display 202 may be visible to a user via the first portion, the second portion, and the third portion of the respective housings, which relate to viewing areas/windows/apertures that allow visual access for a user. The display 202 may include a first display area 202a corresponding to the first housing 210, a second display area 202b corresponding to the second housing 220, and a third display area 202c corresponding to the third housing 230.

According to an embodiment, the electronic device 200 may include supports 240, 250, and 260. The supports 240, 250, and 260 may be disposed between the housing 201 and the display 202. The supports 240, 250, and 260 may be coupled to the housing 201 and may support the display 202. The supports 240, 250, and 260 may be disposed to surround edges of the display 202. The supports 240, 250, and 260 may extend along the circumference of the housing 201. The supports 240, 250, and 260 may include a first support 240 disposed in the first housing 210, a second support 250 disposed in the second housing 220, and a third support 260 disposed in the third housing 230. The support 240, 250, or 260 may be referred to as a "body". The support 240, 250, or 260 may be referred to as a "frame". The support 240, 250, or 260 may be referred to as a "sealing member". The support 240, 250, or 260 may be referred to as a "peripheral part". The support 240, 250, or 260 may be referred to as a "circumferential part". The support 240, 250, or 260 may be referred to as a "peripheral structure". The support 240, 250, or 260 may be referred to as a "circumferential structure".

According to an embodiment, the supports 240, 250, and 260 may include a first support 240. The first support 240 may be disposed between the first housing 210 and the display 202. The first support 240 may be disposed along an edge of the first housing 210. The first support 240 may include a 1-1th support 241 and a 1-2th support 242. At least a portion of the display 202 may be disposed between the 1-1th support 241 and the 1-2th support 242. The 1-1th support 241 may be disposed at one end portion of the first housing 210, and the 1-2th support 242 may be disposed at the other end portion of the first housing 210. The support 240, 250, or 260 may include a non-conductive member. The support 240, 250, or 260 may be referred to as a "deco," "finishing member," or "non-conductive member". The 1-1th support 241 may be referred to as a first sub-support 241. The 1-2th support 242 may be referred to as a second sub-support 242.

According to an embodiment, the supports 240, 250, and 260 may include a second support 250. The second support 250 may be disposed between the second housing 220 and the display 202. The second support 250 may be disposed along an edge of the second housing 220. The second support 250 may include a 2-1th support 251, a 2-2th support 252, and a 2-3th support 253. At least a portion of the display 202 may be disposed between the 2-2th support 252 and the 2-3th support 253. The 2-1th support 251 may connect the 2-2th support 252 and the 2-3th support 253. The 2-1th support 251 may extend along an edge (e.g., the edge 222 of FIG. 2B) of the second housing 220. The 2-1th support 251 may be disposed between the edge 222 of the second housing 220 and the display 202. The 2-1th support 251 may be referred to as a "support frame" or a "first support frame". Each of the 2-2th support 252 and the 2-3th support 253 may be referred to as a "second support frame". The 2-1th support 251 may be referred to as a first sub-support 251. The 2-2th support 252 may be referred to as a second sub-support 252. The 2-3th support 253 may be referred to as a third sub-support 253.

According to an embodiment, the supports 240, 250, and 260 may include a third support 260. The third support 260 may be disposed between the third housing 230 and the display 202. The third support 260 may be disposed along an edge of the third housing 230. The third support 260 may include a 3-1th support 261, a 3-2th support 262, and a 3-3th support 263. At least a portion of the display 202 may be disposed between the 3-2th support 262 and the 3-3th support 263. The 3-1th support 261 may connect the 3-2th support 262 and the 3-3th support 263. The 3-1th support 261 may extend along an edge (e.g., the edge 232 of FIG. 2B) of the third housing 230. The 3-1th support 261 may be disposed between the edge 232 of the third housing 230 and the display 202. The 3-1th support 261 may be referred to as a "support frame" or a "first support frame". Each of the 3-2th support 262 and the 3-3th support 263 may be referred to as a "second support frame". The 3-1th support 261 may be referred to as a first sub-support 261. The 3-2th support 262 may be referred to as a second sub-support 262. The 3-3th support 263 may be referred to as a third sub-support 263.

According to an embodiment, the first housing 210 may include a 1-1th side portion 211 and a 1-2th side portion 212. The side portion may be referred to as an "edge". The 1-1th side portion 211 and the 1-2th side portion 212 may form two opposite side surfaces, respectively, of the first housing 210. The second housing 220 may be coupled to the 1-1th side portion 211. The third housing 230 may be coupled to the 1-2th side portion 212. The 1-1th side portion 211 may be referred to as a "first coupling portion". The 1-2th side portion 212 may be referred to as a "second coupling portion". The 1-1th side portion 211 may be referred to as a "first side portion". The 1-2th side portion 212 may be referred to as a "second side portion".

According to an embodiment, the second housing 220 may include a 2-1th side portion 221 and a 2-2th side portion 222. The 2-1th side portion 221 and the 2-2th side portion 222 may form two opposite side surfaces, respectively, of the second housing 220. The 2-1th side portion 221 may be coupled to the first housing 210. The 2-2th side portion 222 may form a side surface of the housing 201. The 2-1th side portion 221 may be referred to as a "third side portion". The 2-2th side portion 222 may be referred to as a "fourth side portion".

According to an embodiment, the electronic device 200 may include a cover display 203. The second housing 220 may form a space where the cover display 203 is disposed. For example, the cover display 203 may be disposed between the 2-1th side portion 221 and the 2-2th side portion 222. The cover display 203 may be a flat display.

In an embodiment, the second housing 220 may be disposed so that one side thereof surrounds an edge of a portion of the display 202 and the other side thereof surrounds an edge of the cover display 203. The electronic device 200 may include an inner space of the second housing 220 formed by being surrounding by the second housing 220 having the cover display 203 as one surface, a portion of the display 202 as the other side parallel to the one side, and a side surface including a 2-1th side portion 221 and a 2-2th side portion 222.

According to an embodiment, a camera may be disposed in an area of the cover display 203.

According to an embodiment, the third housing 230 may include a 3-1th side portion 231 and a 3-2th side portion 232. The 3-1th side portion 231 and the 3-2th side portion 232 may form two opposite side surfaces, respectively, of the third housing 230. The 3-1th side portion 231 may be coupled to the first housing 210. The 3-2th side portion 232 may form a side surface of the housing 201. The 3-2th side portion 232 may be referred to as an "edge". The 3-1th side portion 231 may be referred to as a "fifth side portion". The 3-2th side portion 232 may be referred to as a "sixth side portion".

According to an embodiment, the cover display may be further disposed in the space formed by the third housing 230. For example, the cover display may be disposed between the 3-1th side portion 231 and the 3-2th side portion 232. The cover display may be a flat display.

According to an embodiment, the electronic device 200 may include a first hinge (e.g., the first hinge 270 of FIG. 3) and a second hinge (e.g., the second hinge 280 of FIG. 3). The first hinge 270 may be disposed between the first housing 210 and the second housing 220. The first hinge 270 may be disposed between the 1-1th side portion 211 and the 2-1th side portion 221. The first hinge 270 may rotatably connect the first housing 210 and the second housing 220. The second hinge 280 may be disposed between the first housing 210 and the third housing 230. The second hinge 280 may be disposed between the 1-2th side portion 212 and the 3-1th side portion 231. The second hinge 280 may rotatably connect the first housing 210 and the third housing 230. The first hinge 270 may be referred to as a "first hinge member". The second hinge 280 may be referred to as a "second hinge member".

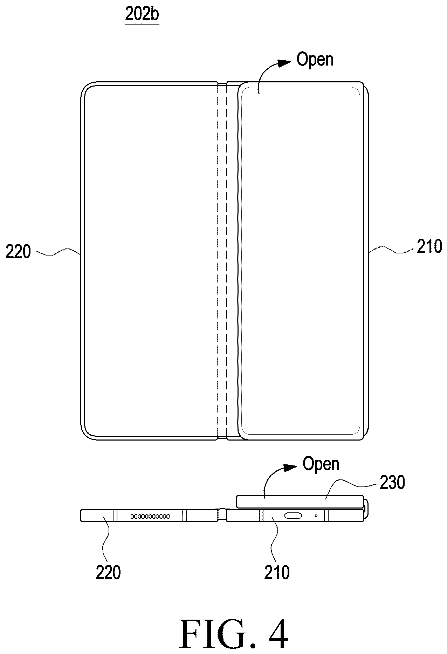

FIG. 3 is a perspective view illustrating a folded state of an electronic device 200 according to an embodiment of the disclosure. Some or all of the components described with reference to FIG. 3 may be the same as all or some of the components described with reference to FIGS. 1 to 2B. Some or all of the components described with reference to FIG. 3 may be the same as all or some of the components described with reference to FIGS. 4 to 26.

According to an embodiment, the second housing 220 may be rotated with respect to the first housing 210. The first hinge 270 may provide a center of rotation to the second housing 220. The first hinge 270 may connect the 1-1th side portion 211 and the 2-1th side portion 221. The third housing 230 may be rotated with respect to the first housing 210. The second hinge 280 may provide a center of rotation to the third housing 230. The second hinge 280 may connect the 1-2th side portion 212 and the 3-1th side portion 231.

FIG. 3 illustrates a folded state of the electronic device 200. The folded state may refer to a specific configurational arrangement of a three-part foldable housing structure and/or the display. The folded state may be understood as a fully folded state in which housing components are arranged vertically in one direction so as to be stacked. Below, further descriptions of the folded state are given to describe various optional aspects related to the folded state.

According to an embodiment, in the folded state of the electronic device 200, each of the first, second, and third housings 210, 220, and 230 may be arranged in one direction (e.g., the +Z direction). For example, the third housing 230 may be disposed above the first housing 210, and the second housing 220 may be disposed above the third housing 230. For example, the third housing 230 may be disposed between the first housing 210 and the second housing 220.

According to an embodiment, the edge 222 of the second housing 220 may be an area of the second housing 220 which overlaps an area in which the screen of the flexible display 202 is not visible from the outside of the housing (e.g., the second housing 220) when the flexible display 202 is viewed from the screen display direction (e.g., the +Z direction). For example, the edge 222 of the second housing 220 may include a bezel portion of the second housing 220.

According to an embodiment, the externally visible portion of the second housing 220 may further include a cover display 203. For example, the cover display 203 may be disposed between the 2-1th side portion 221 and the 2-2th side portion 222. The cover display 203 may be a flat display.

The width of the first hinge 270 may be larger than the width of the second hinge 280. For example, the length of the first hinge 270 extending in the +Z direction may be larger than the length of the second hinge 280 extending in the +Z direction.

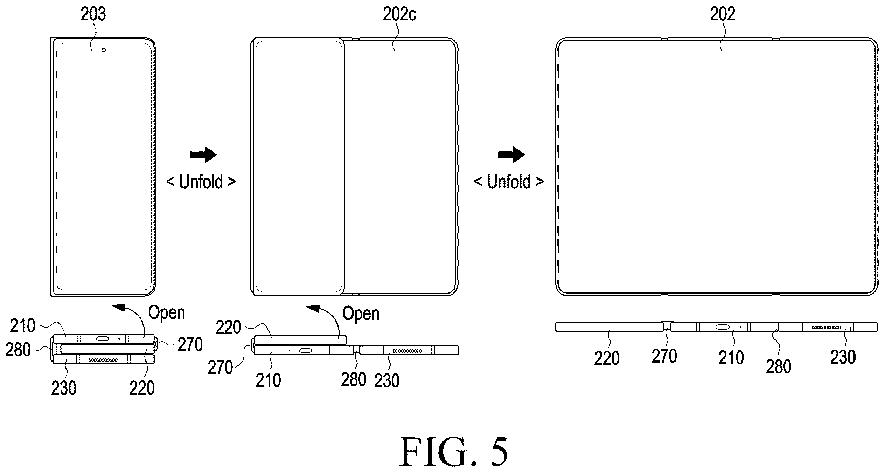

FIG. 4 is a view illustrating a partially folded state of an electronic device according to an embodiment. A partially folded state may be a partially unfolded state. Some or all of the components described with reference to FIG. 4 may be the same as all or some of the components described with reference to FIGS. 1 to 3. Some or all of the components described with reference to FIG. 4 may be the same as all or some of the components described with reference to FIGS. 5 to 30B. FIG. 4 illustrates a partially folded state (e.g. half-folded state) in which only one hinge (e.g., the second hinge 280) of the electronic device 200 may be folded while the other hinge (e.g., the first hinge 270) may be in a fully unfolded state or. The partially folded state of the electronic device may be understood as an asymmetric hinge configuration, for example in which only one hinge is folded while the other hinge is unfolded or partially-folded (e.g., half-folded), or only one hinge is unfolded while the other one is partially-folded (e.g., half-folded).

According to an embodiment, the third housing 230 may be rotated with respect to the first housing 210. The second hinge 280 may provide a center of rotation to the third housing 230. As illustrated in FIG. 4, when the second hinge 280 is fully folded, the third housing 230 may be disposed on the upper side of the first housing 210.

According to an embodiment, the second housing 220 may be rotated with respect to the first housing 210. The first hinge 270 may provide a center of rotation to the second housing 220. As illustrated in FIG. 4, when the first hinge 270 is fully unfolded, the second housing 220 may be positioned parallel to the first housing 210. For example, the first housing 210 may be disposed side by side in the +X direction of the second housing 220.

According to an embodiment, as the third housing 230 may be disposed on the upper side of the first housing 210, and the second housing 220 is disposed side by side with the first housing 210, only the second display area 202b disposed on the second housing, of the display 202, may be exposed to the outside, and the rear surface where the display 202 of the third housing 230 is not disposed may be exposed to the outside.

FIG. 5 is a view illustrating an electronic device folded in a different manner from those of FIGS. 3 and 4.

Referring to FIG. 5, in the folded state of the electronic device (e.g., the electronic device 101 of FIG. 1, the electronic device 200 of FIG. 2A, or the electronic device 200 of FIG. 2B), each of the first, second, and third housings 210, 220, and 230 may be arranged in one direction. For example, the second housing 220 may be disposed on the upper side of the third housing 230, and the first housing 210 may be disposed on the upper side of the second housing 220. For example, the second housing 220 may be disposed between the first housing 210 and the second housing 230.

According to an embodiment, the externally visible portion of the first housing 210 may further include a cover display 203. For example, the cover display 203 may be a flat display.

According to an embodiment, the width of the second hinge 280 (e.g., the second hinge 280 of FIG. 2B) may be larger than the width of the first hinge 270 (e.g., the first hinge 270 of FIG. 2B).

According to an embodiment, the electronic device may be in a half-folded state (e.g., partially folded state) in which at only one hinge (e.g., the first hinge 270) is fully folded, while the other hinge (e.g., the second hinge 280) is fully unfolded, as a consequence of a first unfolding. For example, the first unfolding may be unfolding of the second hinge.

According to an embodiment, the second housing 220 may be rotated with respect to the first housing 210. The first hinge 270 may provide a center of rotation to the second housing 220. As illustrated in FIG. 5, when the first hinge 270 is fully folded, the second housing 220 may be disposed on the upper side of the first housing 210.

According to an embodiment, the third housing 230 may be rotated with respect to the first housing 210. The second hinge 280 may provide a center of rotation to the third housing 230. As illustrated in FIG. 5, when the second hinge 280 is fully unfolded, the third housing 230 may be positioned parallel to the first housing 210.

According to an embodiment, as the second housing 220 is disposed on the upper side of the first housing 210, and the third housing 230 is disposed side by side with the first housing 210, only the third display area 202c disposed on the third housing, of the display 202, may be exposed to the outside, and the rear surface where the display 202 of the first housing 210 is not disposed may be exposed to the outside.

According to an embodiment, the electronic device may be in a state in which the two hinges (e.g., the first hinge 270 and the second hinge 280) are fully unfolded resulting from a second unfolding. For example, the second unfolding may be unfolding of the folded first hinge while the second hinge is in the unfolded state.

In an embodiment, in the fully unfolded state of the electronic device, the first housing 210, the second housing 220, and the third housing 230 may be disposed side by side, and the entire display 202 may be exposed to the outside.

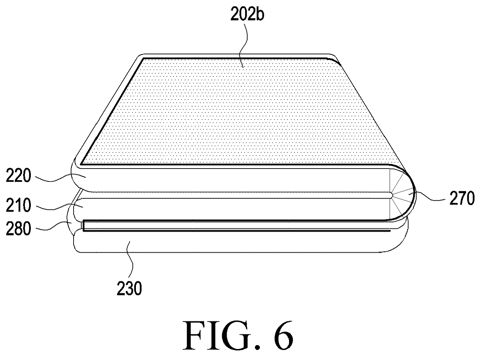

FIG. 6 is a view illustrating an electronic device folded in a different manner from those of FIGS. 3 to 5.

Referring to FIG. 6, in the folded state of the electronic device (e.g., the electronic device 101 of FIG. 1, the electronic device 200 of FIG. 2A, or the electronic device 200 of FIG. 2B), each of the first, second, and third housings 210, 220, and 230 may be arranged in one direction. For example, the first housing 210 may be disposed on the upper side of the third housing 230, and the second housing 220 may be disposed on the upper side of the first housing 210. For example, the first housing 210 may be disposed between the second housing 220 and the third housing 230.

According to an embodiment, the second display area 202b (e.g., the second display area 202b of FIG. 2A) of the flexible display (e.g., the display 202 of FIG. 2A) may be disposed on the externally visible portion of the second housing 220.

According to an embodiment, the first hinge 270 (e.g., the first hinge 270 of FIG. 2B) may be out-folded, and the second hinge 280 (e.g., the second hinge 280 of FIG. 2B) may be in-folded.

According to an embodiment, the second housing 220 may be rotated with respect to the first housing 210. The first hinge 270 may provide a center of rotation to the second housing 220. As illustrated in FIG. 6, when the first hinge 270 is fully folded, the second housing 220 may be disposed on the upper side of the first housing 210.

According to an embodiment, the third housing 230 may be rotated with respect to the first housing 210. The second hinge 280 may provide a center of rotation to the third housing 230. As illustrated in FIG. 6, when the second hinge 280 is fully folded, the third housing 230 may be disposed on the lower side of the first housing 210.

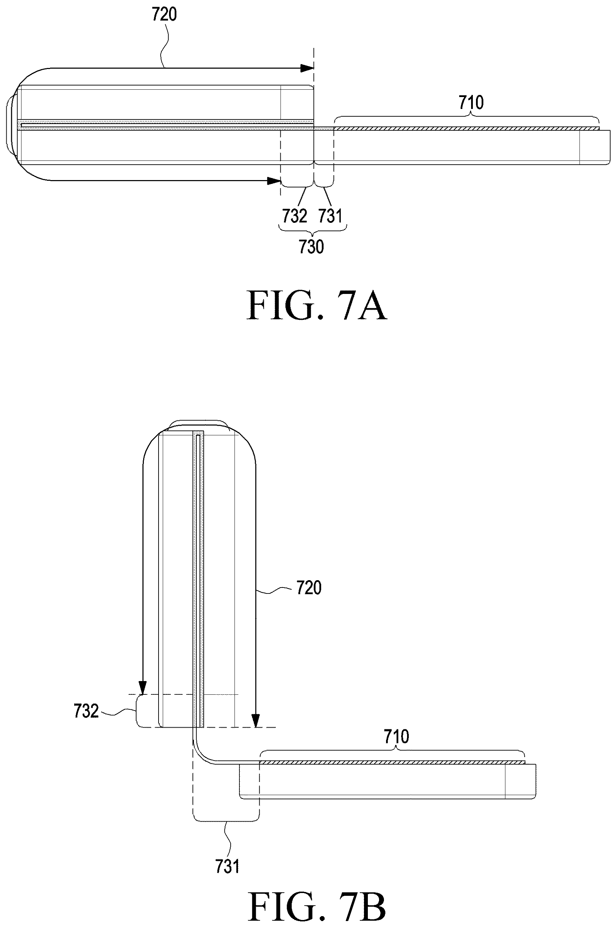

FIG. 7A is a view illustrating an active area, a brightness control area, and an inactive area of a flexible display in a state in which a partial area of a flexible display is exposed to the outside as illustrated in FIGS. 4 and 5. The active area is illustrated by first area 710. The inactive area is illustrated by second area 720. The brightness control area is illustrated by third area 730.

Referring to FIG. 7A, an electronic device (e.g., the electronic device 101 of FIG. 1, the electronic device 200 of FIG. 2A, or the electronic device 200 of FIG. 2B) may be in a half-folded state (e.g., partially folded state) in which only one hinge (e.g., the first hinge 270 of FIG. 4 or the second hinge 280 of FIG. 4) is fully folded and the other hinge is fully unfolded. According to an embodiment, a state in which only a partial area of the flexible display (e.g., the display 202 of FIG. 2A) is exposed to the outside of the electronic device according to half folding may be referred to as a first state. The first state may be referred to as a partially unfolded state (e.g., partially folded state).

For example, when the electronic device is a device (e.g., G fold) that folds in the same manner as illustrated in FIG. 4, the first state may be a state in which the first hinge (e.g., the first hinge 270 of FIG. 4) is fully unfolded and the second hinge (e.g., the second hinge 280 of FIG. 4) may be fully folded.

According to an embodiment, in a device (e.g., e fold) that folds in the same manner as illustrated in FIG. 5, the first state may be a state in which the first hinge (e.g., the first hinge 270 of FIG. 4) is fully folded and the second hinge (e.g., the second hinge 280 of FIG. 4) is fully unfolded.

According to an embodiment, in the first state, a first portion (e.g., the third display area 202c of FIG. 2A) of the flexible display may be exposed to the outside of the electronic device, and a remaining second portion of the flexible display except for the first portion may not be exposed to the outside of the electronic device.

The first portion may be referred to an exposed portion, visible to a user when the electronic device is partially unfolded. The second portion may be referred to as an unexposed portion, relating to parts of the flexible display that are not externally visible to a user. The flexible display may be regarded as being logically segmented/partitioned/divided into the first portion and the second portion, i.e., into the exposed portion and the unexposed portion.

According to an embodiment, the electronic device may activate a first area 710 of the first portion. According to an embodiment, the electronic device may deactivate a second area 720 of the second portion. As illustrated in Fig. 7A, the first area 710 may be a proper subset of the first portion / the exposed portion, and analogously, the second area 720 may be a proper subset of the second portion / the unexposed portion. The electronic device can activate the first area 710 that may correspond to a specific region within the exposed portion. The first area 710 may receive highest or full power and/or brightness. The electronic device may deactivate the second area 720.

According to an embodiment, the electronic device may control the brightness of a third area 730 disposed between the first area 710 and the second area 720. According to an embodiment, the third area 730 may include a bendable area corresponding to a first hinge structure or a second hinge structure of the flexible display. The third area 730 may be understood as a transition area (brightness control area) that may be controlled via a special brightness configuration. The third area 730 may be used to function as a transitional zone to gradually control brightness for creating a smooth visual transition and/or prevent ghosting effects at boundaries. Such functionalities are also described in more detail further below.

According to an embodiment, the third area 730 may include a 3-1th area 731 included in the first portion and a 3-2th area 732 included in the second portion. According to an embodiment, the width of the 3-1th area 731 may be determined based on an area that is not well visible at a specific viewing angle based on the viewing angle for the user to see the first area 710. The 3-1th are 731 may be referred to as a first sub-area 731, first transition zone 731, or first transition area 731. The 3-2th area 732 may be referred to as a second sub-area 732, second transition zone 732, or second transition area 732.

According to an embodiment, based on the hinge corresponding to the third area 730 having an in-fold structure, the 3-1th area 731 may be included in the unfolded bendable area of the first portion in the first state, and the 3-2th area 732 may be included in the unfolded bendable area of the second portion in the first state.

According to an embodiment, the electronic device may sequentially decrease brightness from the brightness of the first area 710 to the brightness of the second area 720 from an area of the third area 730, close to the first area 710 to an area close to the second area 720. In other words, the electronic device may control luminance transition from a first brightness level of the first area 710 of the exposed portion to a second brightness level of the second area 720 of the unexposed portion, the first brightness level being higher than the second brightness level. Such luminance transition may be controlled through the transitional area 730, starting from a boundary of the first area 710 to a boundary of the second area 720.

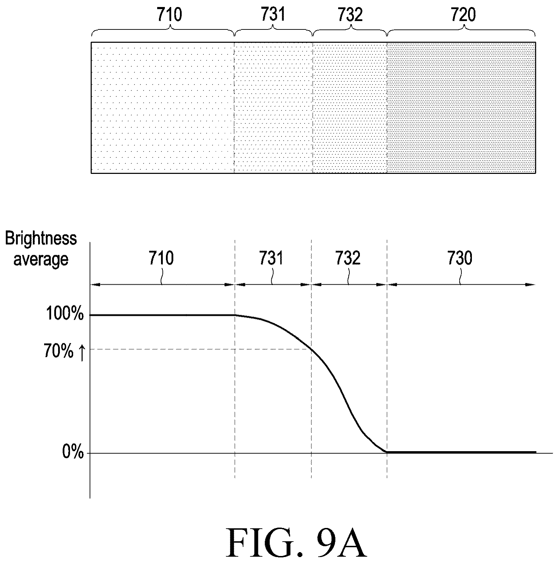

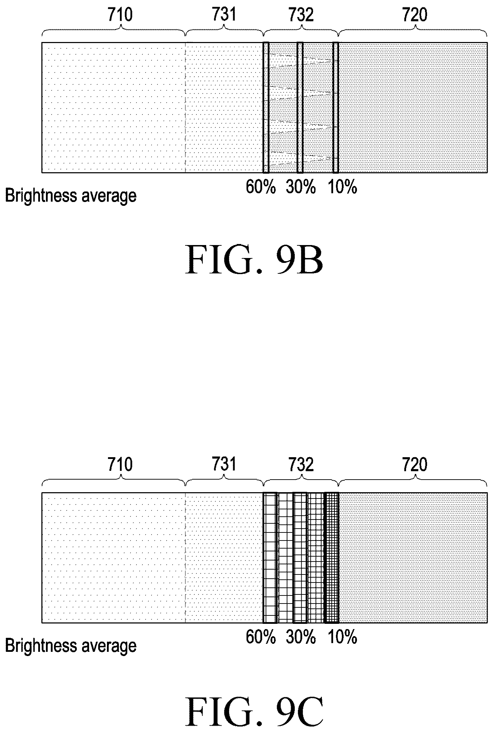

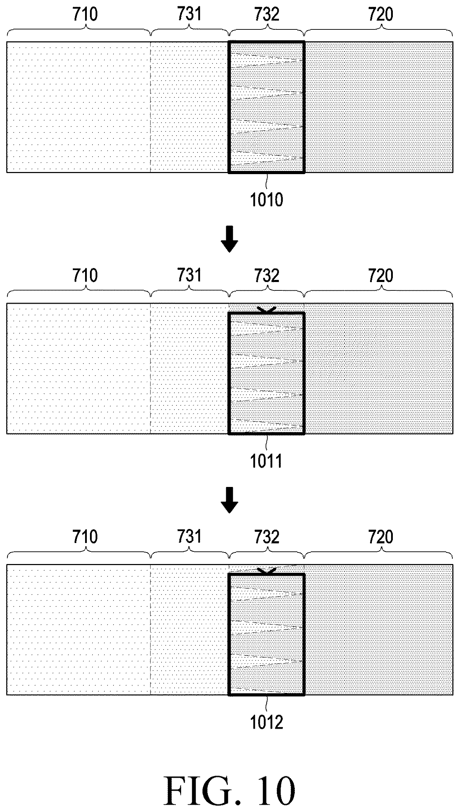

According to an embodiment, the electronic device may control the brightness values of the 3-1th area 731 and the 3-2th area 732 using different methods. According to an embodiment, an operation of controlling the brightness values of the 3-1th area 731 and the 3-2th area 732 in different methods is described below in FIGS. 9A, 9B, 9C, and 10.

FIG. 7B is a view illustrating an active area, a brightness control area, and an inactive area of a flexible display in a state in which a partial area of a flexible display is exposed to the outside as illustrated in FIGS. 4 and 5.

Referring to FIG. 7B, in a device (e.g., G fold) folded in the manner as illustrated in FIG. 4 or a device (e.g., e fold) folded in the manner as illustrated in FIG. 5, a first boundary between the first area 710 and the third area 730 may be a boundary between an area visible to the user and an area invisible to the area when the user views, from the front, a partial area of the flexible display (or main display) exposed to the outside when the angle of the first hinge (e.g., the first hinge 270 of FIG. 4) is 0 degrees, and the angle of the second hinge (e.g., the second hinge 280 of FIG. 4) is 90 degrees (e.g., in the half-folded state or an intermediate state switching from an intermediate unfolded step to the fully folded state), i.e., when the user's gaze is perpendicular to the externally exposed partial area of the flexible display.

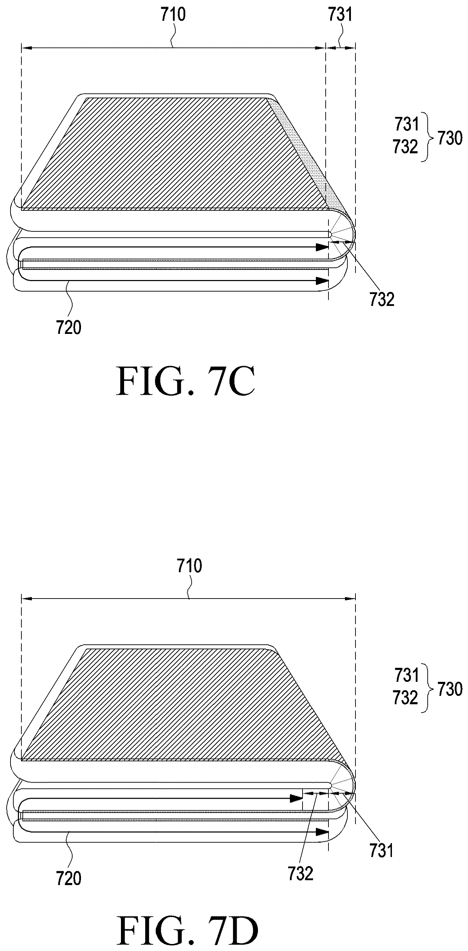

FIG. 7C is a view illustrating an active area, a brightness control area, and an inactive area of a flexible display in a state in which a partial area of a flexible display is exposed to the outside as illustrated in FIG. 6.

Referring to FIG. 7C, when an electronic device (e.g., the electronic device 101 of FIG. 1, the electronic device 200 of FIG. 2A, or the electronic device 200 of FIG. 2B) is a device (e.g., Z fold) that folds in the same manner as illustrated in FIG. 6, one hinge (e.g., the first hinge 270 of FIG. 6) may be fully out-folded, and the other hinge (e.g., the second hinge 280 of FIG. 6) may be fully in-folded. According to an embodiment, a state in which only a partial area of the flexible display as one hinge is fully out-folded and the other hinge is fully in-folded may be referred to as the first state.

According to an embodiment, in the first state, a first portion (e.g., the third display area 202b of FIG. 2A) of the flexible display (e.g., the display 202 of FIG. 2A) may be exposed to the outside of the electronic device, and a remaining second portion of the flexible display except for the first portion may not be exposed to the outside of the electronic device.

According to an embodiment, the electronic device may activate a first area 710 of the first portion. According to an embodiment, the electronic device may deactivate a second area 720 of the second portion.

According to an embodiment, the electronic device may control the brightness of a third area 730 disposed between the first area 710 and the second area 720. According to an embodiment, the third area 730 may include a bendable area corresponding to a first hinge structure of the flexible display. According to an embodiment, the third area 730 may include a 3-1th area 731 and a 3-2th area 732 included in the first portion.

According to an embodiment, based on the hinge corresponding to the third area 730, the 3-1th area 731 may be an area included in the out-folded bendable area of the first portion in the first state and visible at a specific viewing angle where the first area 731 is visible, and the 3-2th area 732 may be an area included in the out-folded bendable area of the first portion and invisible at the specific viewing angle where the first area 731 is visible.

According to an embodiment, the electronic device may sequentially decrease brightness from the brightness of the first area 710 to the brightness of the second area 720 from an area of the third area 730, close to the first area 710 to an area close to the second area 720.

According to an embodiment, the electronic device may control the brightness values of the 3-1th area 731 and the 3-2th area 732 using different methods. According to an embodiment, an operation of controlling the brightness values of the 3-1th area 731 and the 3-2th area 732 in different methods is described below in FIGS. 9A, 9B, 9C, and 10.

FIG. 7D is a view illustrating an active area, a brightness control area, and an inactive area of a flexible display in a state in which a partial area of a flexible display is exposed to the outside as illustrated in FIG. 6.

Referring to FIG. 7D, in a device (e.g., Z fold) that folds in the manner as illustrated in FIG. 6, a first boundary between the first area 710 and the third area 730 may be a boundary between an area visible to the user and an area invisible to the user when the user views, from the front, a partial area of the flexible display (or main display) exposed to the outside when the angle of the first hinge is 360 degrees, and the angle of the second hinge is 0 degrees (fully folded state), i.e., when the user's gaze is perpendicular to the externally exposed flexible display.

According to an embodiment, the third boundary between the 3-1th area 731 and the 3-2th area 732 may be a boundary between the area visible to the user and the area invisible to the user when out-folding hinge is viewed from a side surface so that the user's gaze is parallel to the externally exposed flexible display.

According to an embodiment, the 3-1th area 731 may be included in the bendable area, and the 3-2th area 732 may be included in an unbendable area.

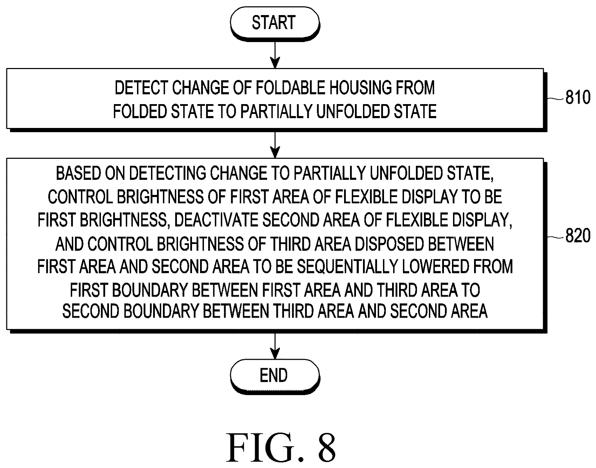

FIG. 8 is a flowchart illustrating an operation of adjusting the brightness for each area of a flexible display to reduce ghosting due to degradation of the flexible display in an electronic device according to an embodiment.

Referring to FIG. 8, in operation 810, an electronic device (e.g., the electronic device 101 of FIG. 1, the electronic device 200 of FIG. 2A, or the electronic device 200 of FIG. 2B) may detect a change from the folded state to the partially unfolded state of the foldable housing. According to an embodiment, the electronic device may detect a change to the unfolded state of the foldable housing by the sensor.

According to an embodiment, the partially unfolded state may be a first state in which the first portion of the flexible display (e.g., the display module 160 of FIG. 1 or the display 202 of FIG. 2A) is visually exposed to the outside of the electronic device, and the second portion except for the first portion of the flexible display is not visually exposed to the outside of the electronic device. According to an embodiment, the description of the first state is the same as the description of FIG. 7A or 7C, and no repeated descriptions are presented.

According to an embodiment, in operation 820, the electronic device may, based on detecting a change from the unfolded state of the foldable housing to the partially unfolded state, control the brightness of the first area of the flexible display to be a first brightness, deactivate the second area of the flexible display, and control the brightness of the third area to be sequentially lowered from the first boundary between the first area and the third area to the second boundary between the third area and the second area. According to an embodiment, the electronic device may perform operation 820 to reduce ghosting of the flexible display caused by degradation of the flexible display.

According to an embodiment, the electronic device may control the first area, which is a portion/subset/part of the first portion visually exposed to the outside of the electronic device, at a set first brightness. According to an embodiment, the first brightness may be set by a user input or may be set in relation to a function to be executed or may be related to a default setting of the electronic device.

According to an embodiment, the electronic device may deactivate a second area that is at least a partial area of the second portion that is not visually exposed to the outside of the electronic device. According to an embodiment, the electronic device may not provide power to the second area.

According to an embodiment, the third area may include a 3-1th area extending from the first area and a 3-2th area extending from the 3-1th area to the second area. According to an embodiment, the description of the 3-1th area and the 3-2th area is the same as the description of FIG. 7A or 7C, and no repeated descriptions are presented.

According to an embodiment, the electronic device may, as part of controlling the brightness of the third area to be sequentially lowered, control the brightness of the 3-1th area to be sequentially lowered based on a first method from the first boundary to a third boundary between the 3-1th area and the 3-2th area.

According to an embodiment, in a device (e.g., G fold) folded in the manner as illustrated in FIG. 4 or a device (e.g., e fold) folded in the manner as illustrated in FIG. 5, a third boundary may be a boundary between an area visible to the user and an area invisible to the area when the user views, from the front, a partial area of the flexible display (or main display) exposed to the outside when the angle of the first hinge (e.g., the first hinge 270 of FIG. 4) is 0 degrees, and the angle of the second hinge (e.g., the second hinge 280 of FIG. 4) is 180 degrees (e.g., in the half-folded state or an intermediate state switching from an intermediate unfolded step to the fully folded state), i.e., when the user's gaze is perpendicular to the externally exposed partial area of the flexible display.

According to an embodiment, in a device (e.g., Z fold) as illustrated in FIG. 6, the third boundary may be a boundary between the area visible to the user and the area invisible to the user when the first hinge (out-folding hinge) is viewed in a direction parallel to the partial area of the flexible display (or main display) exposed to the outside in a state (e.g., fully folded state) in which the angle of the first hinge is 360 degrees, and the angle of the second hinge is 0 degrees.

According to an embodiment, the first method may be a method for controlling the brightness of the 3-1th area to be sequentially lowered from the first brightness at a set ratio of the first brightness, from the first boundary to the third boundary.

According to an embodiment, the electronic device may display one content across the first area and the 3-1th area. As such, the content of the first area may be extended and displayed in the 3-1th area visible to the user of the third areas.

According to an embodiment, the electronic device may, as at least part of controlling the brightness of the third area to be sequentially lowered, control the brightness of the 3-2th area to be sequentially lowered from the third boundary to the second boundary based on a second method different from the first method.

According to an embodiment, when the brightness of the 3-1th area is sequentially lowered at the first ratio, the electronic device may control the brightness of the 3-2th area to be sequentially lowered at a second ratio different from the first ratio, preferably larger than the first ratio. According to an embodiment, the brightness at the boundary between the 3-1th area and the 3-2th area may be continuously lowered. For example, when the brightness is sequentially lowered from the first brightness to 70% of the first brightness in the 3-1th area, the electronic device may control the first brightness to be sequentially lowered from 70% of the first brightness to the minimum brightness from the boundary between the 3-1th area and the 3-2th area to the second area. An example in which the brightness is sequentially lowered in the 3-2th area is described below in more detail with reference to FIG. 9A.

According to an embodiment, the second method may be a method displaying a set image in the 3-2th area. The set image may include a portion having the first brightness and a portion having a minimum brightness, and an average brightness of a pixel line parallel to the third boundary may be sequentially lowered from the set ratio of the first brightness to the minimum brightness, from the third boundary to the second boundary. The set image may be understood as a (pre-)designed arrangement of pixels, with (pre-)determined characteristics, for performing the brightness control. The set image may also be referred to as a brightness-control pattern, a brightness-compensation pattern, a gradient-transition mask, a luminance-distribution matrix, a degradation-management patterns, a transitional-zone pattern, and the like.

According to an embodiment, the set image may include a pattern including the portion having the first brightness and the portion having the minimum brightness. According to an embodiment, the set image may include a pattern in which the proportion of the area having the minimum brightness increases from the third boundary to the second boundary. According to an embodiment, an operation of displaying an image set in the 3-2th area is described below in more detail with reference to FIGS. 9B and 9C.

According to an embodiment, the position of the pattern may be periodically moved in the 3-2th area. Accordingly, degradation of the display due to the pattern may be reduced. According to an embodiment, an operation of moving the position of the pattern is described in more detail with reference to FIG. 10.

According to an embodiment, the user may be prevented from perceiving brightness control by dividing the third area into a 3-1th area and a 3-2th area and decreasing the brightness of the 3-1th area visible to the user to a specific proportion (e.g., 70%) of the first brightness by the first method. Further, as the 3-2th area invisible to the user is rendered to display the set image considering only the average of colors and the first brightness of the first area, it is not required to generate content as in the 3-1th area, reducing resources required to drive the display.

According to an embodiment, the electronic device may, based on usage history data for a plurality of areas of the flexible display, identify a degradation level in the plurality of areas of the flexible display. According to an embodiment, the electronic device may determine at least one of a set image or a set ratio based on the degradation level of the flexible display.

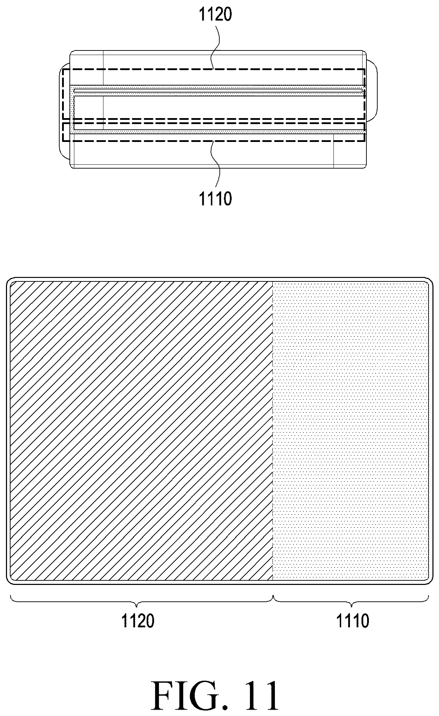

According to an embodiment, the electronic device may active the second area and control to operate at a brightness less than a set value. For example, the electronic device may display the second area as a black screen or display a specific image at a brightness less than the set value. According to an embodiment, an operation of activating the second area to display a specific image is described in more detail with reference to FIGS. 11 to 21.

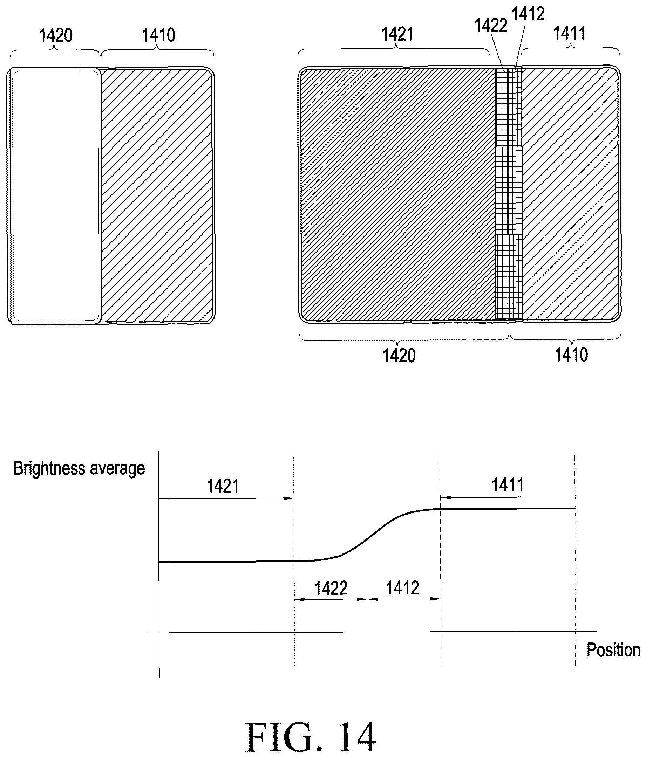

According to an embodiment, the electronic device may control the brightness of the third area between the first area and the second area to sequentially decrease. For example, the electronic device may control the brightness of the third area to be sequentially lowered from the first brightness of the first area to the minimum brightness of the second area. According to an embodiment, an operation of controlling brightness for each area of the third area in a state in which the second area is activated is described in more detail with reference to FIG. 14.

According to an embodiment, the electronic device may deactivate at least a portion of the border area of the second area based on the value of the ambient illuminance sensed by the illuminance sensor (e.g., the sensor module 176 of FIG. 1) being less than a set value. As such, when the ambient illuminance is less than the set value, at least a portion of the border of the second area is deactivated, so that activation of the second area may not be perceived from the outside of the electronic device even when the second area is activated to display an image to reduce ghosting.

According to an embodiment, the electronic device may deactivate the at least a portion of the border area so that a brightness of the border area may be sequentially lowered from a boundary with an activated area of the second area. As described above, ghosting generated at a boundary between the deactivated area and the activated area among the border areas of the second area may be reduced.

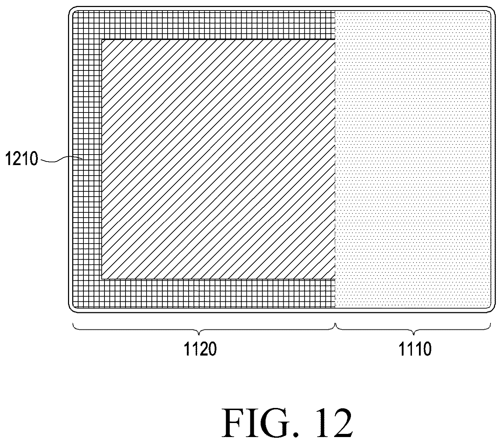

An example of activating the second area that is not exposed to the outside of the electronic device but deactivating the border of the second area is described with reference to FIGS. 12, 13A, 13B, 15, 16, 17, 18, 19, and 20.

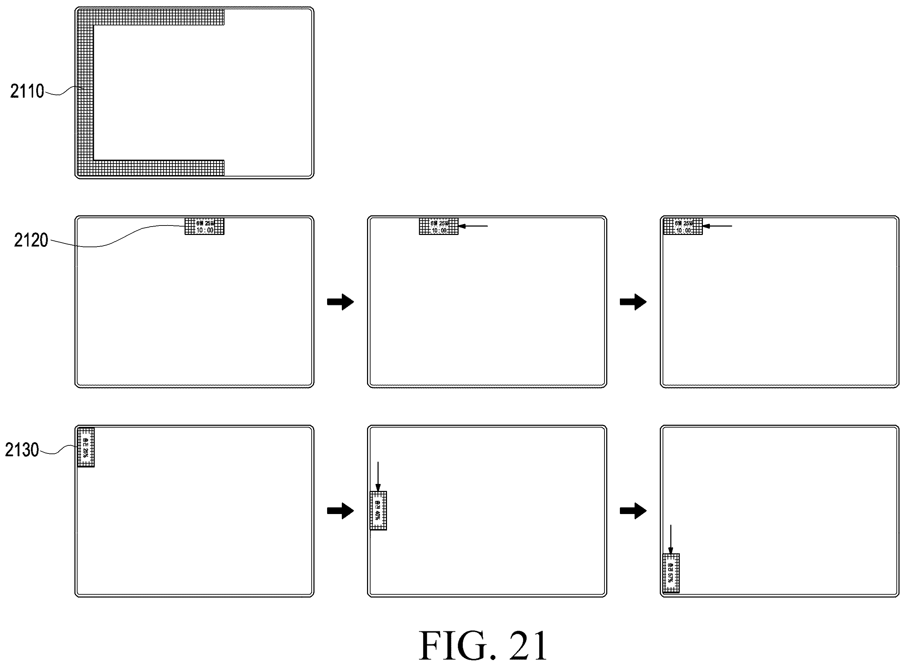

According to an embodiment, the electronic device may periodically move and display a specific image in the border area to reduce ghosting generated at the boundary between the deactivated area and the activated area due to deactivation of the border area. According to an embodiment, an operation of moving and displaying a specific image on the border of the second area that is not exposed to the outside of the electronic device is described with reference to FIG. 21.

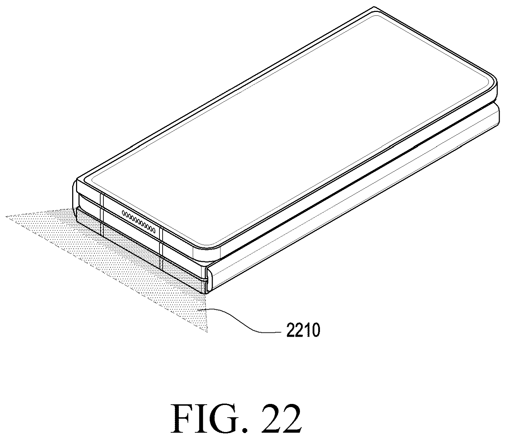

According to an embodiment, the electronic device may use the border area as an indicator for notification in order to reduce ghosting generated at the boundary between the deactivated area and the activated area due to deactivation of the border area. For example, when a notification occurs, an indicator (e.g., highlight) indicating that the notification has occurred may be displayed in the border area of the second area. An example of displaying an indicator indicating that a notification has been generated in the border area of the second area is described below with reference to FIG. 22.

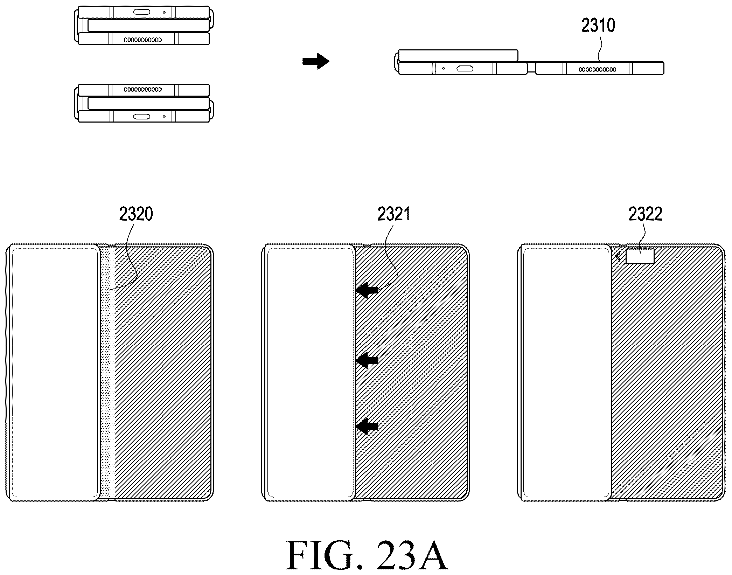

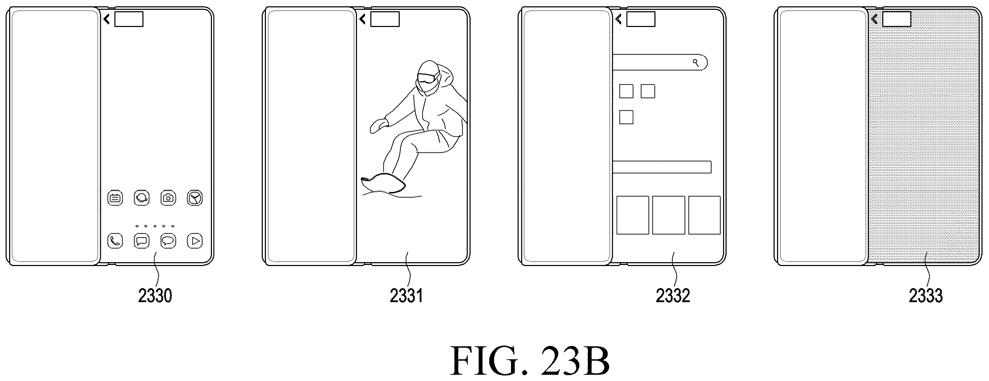

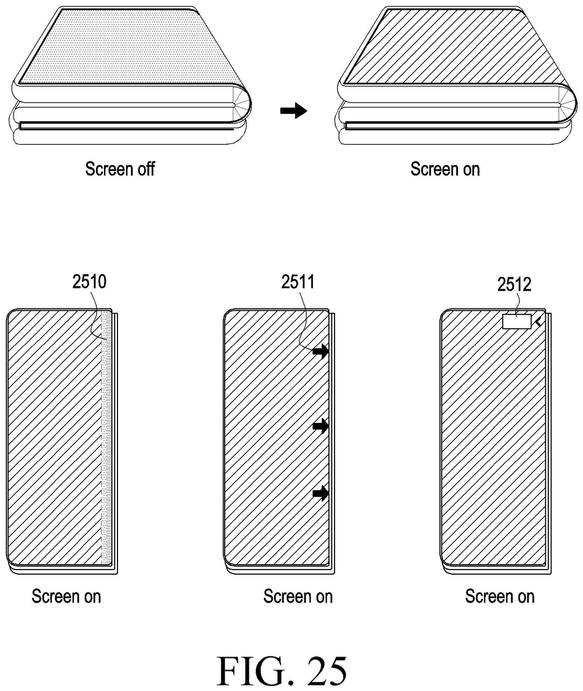

According to an embodiment, the electronic device may be led to be fully unfolded so that the second area also operates at the same brightness as the first area in order to reduce the degradation difference between the first area and the second area of the flexible display. For example, the electronic device may display an indicator that leads the flexible display to be fully unfolded in the exposed first area in the first state in which only a portion of the flexible display is exposed to the outside. An example of displaying an indicator for leading to unfolding in a state in which the folding state is the first state is described with reference to FIGS. 23A, 23B, and 25.

According to an embodiment, the electronic device may adjust the brightness for each area when the entire area of the flexible display is activated according to a difference in degradation for each area of the flexible display. According to an embodiment, the electronic device may identify degradation of each area of the flexible display based on the usage history of the flexible display.

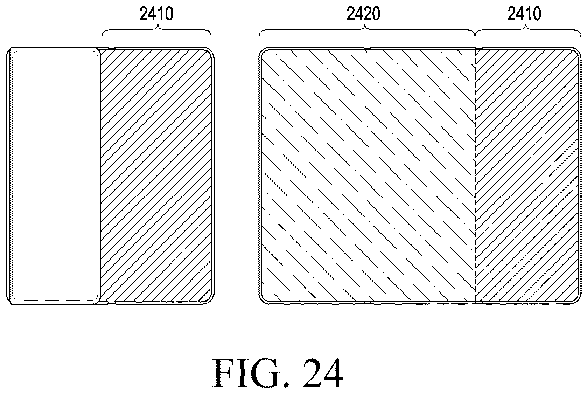

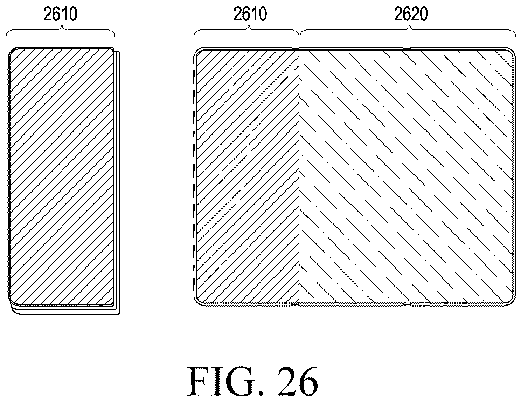

For example, the electronic device may compensate for the degradation difference between the two areas by identifying degradation for each area of the flexible display and controlling the brightness of the area with relatively less degradation to be higher than the brightness of the area with relatively more degradation. An example in which brightness is differently controlled according to a degradation difference for each area of the flexible display is described with reference to FIGS. 24 and 26.

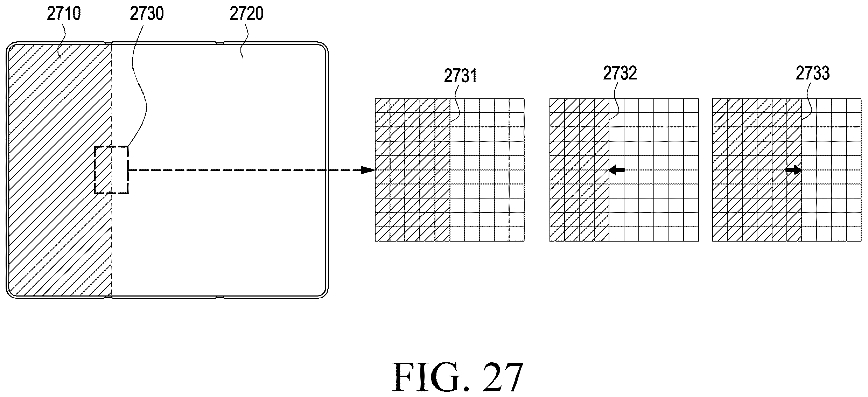

According to an embodiment, the electronic device may periodically move the boundary in order to reduce ghosting generated at the boundary between the activated first area and the deactivated second area of the flexible display. For example, the electronic device may periodically move the boundary between the first area and the second area in units of pixels. An example of periodically moving the boundary of an area to reduce ghosting is described with reference to FIG. 27.

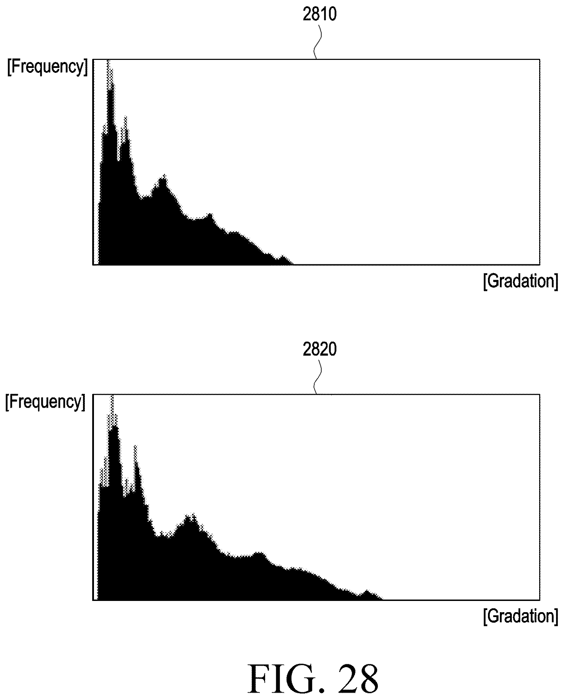

According to an embodiment, the electronic device may compensate for a decrease in brightness of the degraded flexible display by correcting the image quality of the content. For example, the electronic device may correct the image quality of the content by adjusting the gradation range applied to the flexible display. An example of correcting the gradation range of the content is described with reference to FIG. 28.

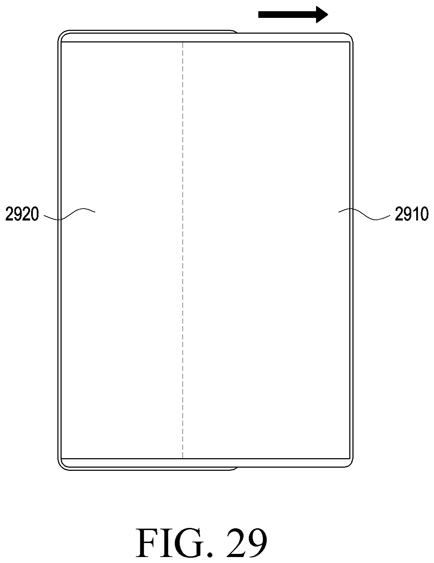

According to an embodiment, when the electronic device is a rollable electronic device, the electronic device may adjust the brightness of each area of the flexible display to reduce ghosting due to degradation of the flexible display. According to an embodiment, when the electronic device is a rollable electronic device, an embodiment of adjusting the brightness for each area of the flexible display is described with reference to FIG. 29.

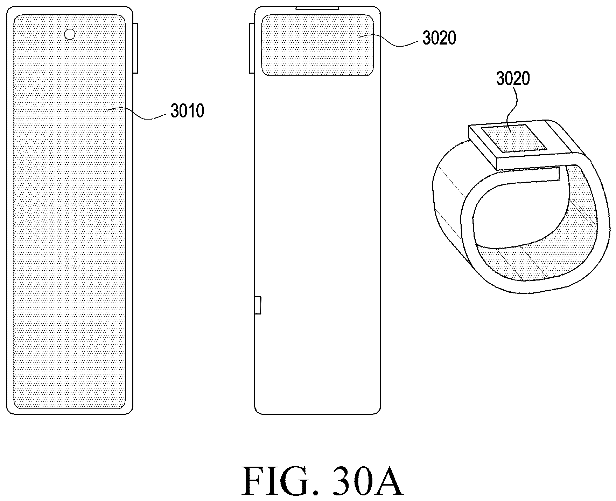

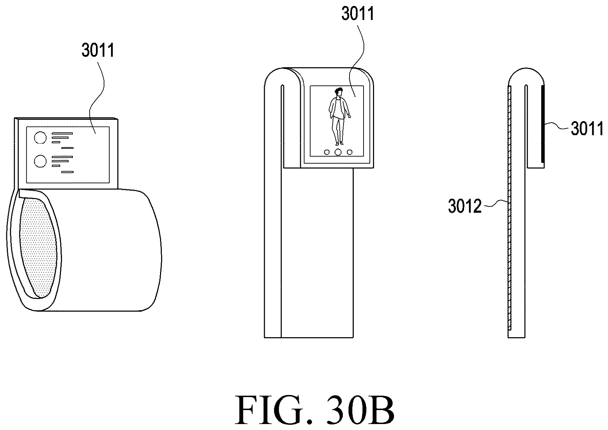

According to an embodiment, when the electronic device is a bendable electronic device, the electronic device may adjust the brightness of each area of the flexible display in order to reduce ghosting caused by degradation of the flexible display. According to an embodiment, when the electronic device is a bendable electronic device, an embodiment of adjusting the brightness for each area of the flexible display is described with reference to FIGS. 30A and 30B.

As such, the electronic device according to the disclosure may alleviate ghosting due to a degradation difference between the areas of the flexible display by sequentially lowering the brightness of the boundary area for each area in the folding state (e.g., intermediated unfolded step) in which only a portion of the flexible display is turned on or activating the screen with less use frequency on the standby screen.

FIG. 9A is a view illustrating an operation of adjusting the brightness for each area of a flexible display to reduce ghosting due to degradation of the flexible display in an electronic device according to an embodiment.

FIG. 9B is a view illustrating an operation of adjusting the brightness for a particular area (e.g., subarea 732 of transitional area 730) of a flexible display to reduce ghosting due to degradation of the flexible display in an electronic device according to an embodiment.

FIG. 9C is a view illustrating an operation of adjusting the brightness for a particular area (e.g., subarea 732 of transitional area 730) of a flexible display to reduce ghosting due to degradation of the flexible display in an electronic device according to an embodiment.

FIGS. 9A to 9C illustrate brightness of each area of the flexible display in the first state illustrated in FIG. 7A or 7C in which only a partial area of the electronic device is exposed to the outside of the electronic device.

Referring to FIG. 9A, the electronic device (e.g., the electronic device 101 of FIG. 1, the electronic device 200 of FIG. 2A, or the electronic device 200 of FIG. 2B) may control the first area 710 of the first portion of the flexible display (e.g., the display module 160 of FIG. 1 or the display 202 of FIG. 2A) to have a first brightness (e.g., 100% brightness) in the first state in which only the first portion of the flexible display is visually exposed to the outside of the electronic device. According to an embodiment, the second portion of the flexible display other than the first portion may not be visually exposed to the outside of the electronic device.

According to an embodiment, the electronic device may deactivate the second area 720 of the second portion of the flexible display (e.g., 0% brightness) or control the second area 720 at the minimum brightness.

According to an embodiment, the electronic device may control the brightness of the third area disposed between the first area 710 and the second area 720 to be sequentially lowered from the first boundary between the first area 710 and the third area to the second boundary between the third area 720 and the second area 720. For example, the electronic device may control the brightness of the third area so that the average brightness value of the pixel line parallel to the first area 710 decreases sequentially toward the second area 720.

According to an embodiment, the third area may include a 3-1th area 731 close to the first area 710 and a 3-2th area 732 close to the second area 720.

According to an embodiment, the electronic device may control the brightness of the 3-1th area 731 to be sequentially lowered from the first boundary to the third boundary between the 3-1th area 731 and the 3-2th area 732. According to an embodiment, the electronic device may control the brightness of the 3-1th area 7319 to be sequentially lowered from the first brightness at a set ratio (e.g., 70%) of the first brightness, from the first boundary to the third boundary.

According to an embodiment, the electronic device may control the brightness of the 3-2th area 732 to be sequentially lowered from the third boundary between the 3-1th area 731 and the 3-2th area 732 to the second boundary between the 3-2th area 732 and the second area 720. According to an embodiment, the electronic device may control the brightness of the 3-2th area 732 to be sequentially lowered from the set ratio (e.g., 70%) of the first brightness to the minimum brightness (e.g., 0%) from the third boundary to the second boundary.

As illustrated in FIGS. 9B and 9C, the electronic device may display a set image set in the 3-2th area 732. According to an embodiment, the set image may include a portion having the first brightness and a portion having the minimum brightness. According to an embodiment, the set image may include a portion having a brightness value between the first brightness and the minimum brightness according to the degree of screen degradation, and the color may be determined based on the color of the first area 710. According to an embodiment, the RGB value of the color included in the set image may be determined according to the degree of degradation based on usage history data of the first area 710.

According to an embodiment, in the set image, the average brightness of the pixel line parallel to the third boundary between the 3-1th area 731 and the 3-2th area 732 is sequentially lowered from a set ratio (e.g., 60%) of the first brightness which is the brightness of the first area 710 to the minimum brightness (e.g., 10% of the first brightness) from the third boundary to the second boundary between the 3-2th area 732 and the second area 720.

According to an embodiment, a slope in which brightness decreases as it approaches the second boundary in the 3-2th area 732 may be larger than a slope in which brightness decreases as it approaches the third boundary in the 3-1th area 731. According to an embodiment, the middle point of the 3-2th area 732 may be a value lower than the middle value between brightness (e.g., 60% of the first brightness) at the third boundary and brightness (e.g., 10% of the first brightness) at the second boundary. As such, it is possible to prevent brightness control for reducing ghosting from being perceived by the user by decreasing the degree of brightness reduction in the area visible to the user while increasing the degree of brightness reduction in the area invisible to the user.

According to an embodiment, the set image may be one image selected from among a plurality of images stored in the memory (e.g., the memory 130 of FIG. 1). According to an embodiment, each of the plurality of images may include a pattern. For example, as illustrated in FIG. 9B, the set image may include a plurality of triangles having the first brightness, disposed on a background of the minimum brightness. The triangles are spaced apart from each other by a set distance, and may be disposed so that the bottom surface contacts the third boundary, and its width decreases toward the second boundary. Accordingly, the average brightness value of the pixel lines parallel to the third boundary may decrease sequentially toward the second boundary.

According to an embodiment, as illustrated in FIG. 9C, the set image may include a plurality of dots having the first brightness on the background of the minimum brightness. Dots having the same size may be disposed to be parallel to the third boundary, and the size of the dot may decrease from the third boundary to the second boundary. According to an embodiment, the interval between the dots having the same size may increase toward the second boundary on the background having the minimum brightness. Accordingly, the average brightness value of the pixel lines parallel to the third boundary may decrease sequentially toward the second boundary.

FIG. 10 is a view illustrating an operation of periodically moving a displayed image (e.g., set image) to reduce ghosting due to degradation of a flexible display in an electronic device according to an embodiment.

Referring to FIG. 10, the electronic device (e.g., the electronic device 101 of FIG. 1, the electronic device 200 of FIG. 2A, or the electronic device 200 of FIG. 2B) may control the first area 710 of the first portion of the flexible display (e.g., the display module 160 of FIG. 1 or the display 202 of FIG. 2A) to have a first brightness (e.g., 100% brightness) in the first state in which only the first portion of the flexible display is visually exposed to the outside of the electronic device. According to an embodiment, the second portion of the flexible display other than the first portion may not be visually exposed to the outside of the electronic device.

According to an embodiment, the electronic device may deactivate the second area 720 of the second portion of the flexible display (e.g., 0% brightness) or control the second area 720 at the minimum brightness (e.g., (pre)set by the electronic device).

According to an embodiment, the third area disposed between the first area 710 and the second area 720 may include a 3-1th area 731 close to the first area 710 and a 3-2th area 732 close to the second area 720.

According to an embodiment, the electronic device may control the brightness of the 3-1th area 731 to be sequentially lowered from the first boundary to the third boundary between the 3-1th area 731 and the 3-2th area 732.

According to an embodiment, the electronic device may display a set image 1010 in the 3-2th area 732. According to an embodiment, the set image 1010 may move the position of the included pattern in a set period. According to an embodiment, the electronic device may move the position of the pattern in a direction of a pixel line parallel to the boundary between the first portion and the second portion. For example, referring to FIG. 10, the electronic device may display a second image 1011 in which the pattern of the set image 1010 is moved downward by a set distance at a set period after displaying the set image 1010. According to an embodiment, a third image 1012 in which the pattern of the second image 1011 is moved downward by a set distance may be displayed at a set period after the second image 1011 is displayed.

As such, it is possible to reduce a risk of ghosting due to display of the pattern by periodically moving the pattern of the image.

FIG. 11 is a view illustrating an operation of driving an area not exposed to the outside of an electronic device to reduce ghosting due to degradation of a flexible display in an electronic device according to an embodiment.

Referring to FIG. 11, when the electronic device (e.g., the electronic device 101 of FIG. 1, the electronic device 200 of FIG. 2A, or the electronic device 200 of FIG. 2B) is in a folded state in which the entire area of the flexible display (e.g., the display module 160 of FIG. 1 or the display 202 of FIG. 2A) is not visually exposed to the outside, the entire area of the flexible display may be deactivated. According to an embodiment, a first area 1110 which has relatively more degradation due to a higher use frequency and a second area 1120 which has relatively less degradation due to a lower use frequency in the flexible display may be identified. For example, in the first state in which only the first area 1110 of the flexible display is visually exposed to the outside of the electronic device, only the first area 1110 of the flexible display may be activated, and the second area 1120 which is not exposed may be deactivated, so that the first area 1110 may have more degradation, and the second area 1120 may have less degradation.

According to an embodiment, in the folded state in which the entire area of the flexible display is in a standby screen state, the first area 1110 may be maintained in the standby screen state, and the second area 1120 may be activated to degrade the second area 1120.

According to an embodiment, the electronic device may determine the brightness and color of an image to be displayed in the activated second area 1120 in the folded state based on the pixel emission accumulated data of the second area 1120.

As such, by activating only the second area 1120, the electronic device may compensate for the degradation difference between the first area 1110 and the second area 1120.

According to an embodiment, the electronic device may activate the second area 1120 only when the ambient illuminance in the folded state is a set first value or more. For example, the set first value may be a value between 20 and 100 lux. According to an embodiment, the electronic device may activate the second area 1120 only when the ambient illuminance is larger than or equal to a value between 20 and 100 lux. As such, by activating the second area 1120 only when the ambient illuminance is the set first value or more, it is possible to prevent the user from perceiving the activation of the second area 1120 although when the second area 1120 is activated.

According to an embodiment, in order to reduce the amount of current consumed by driving the second area 1120, the electronic device may apply a low frame frequency between 1 and 15 Hz, display an image stored in display driver IC (DDI) memory in the second area 1120, or generate an ELVDD/ELVSS voltage supplied from a power management integrated circuit (PMIC) in the DDI.

FIG. 12 is a view illustrating an operation of driving an area not exposed to the outside of an electronic device to reduce ghosting due to degradation of a flexible display in an electronic device according to an embodiment.

Referring to FIG. 12, when maintaining the first area 1110 in the standby screen state and activating the second area 1120 in the folded state in which the entire area of the flexible display (e.g., the display member 160 of FIG. 1 or the display 202 of FIG. 2A) is the standby screen state as illustrated in FIG. 11, the electronic device (e.g., the electronic device 101 of FIG. 1, the electronic device 200 of FIG. 2A, or the electronic device 200 of FIG. 2B) may deactivate the border area 1210 seen from the outside, of the second area 1120, and activate only the remaining area except for the border area 1210 of the second area 1120.

According to an embodiment, the electronic device may activate only the remaining area of the second area 1120 except for the border area 1210 regardless of ambient illumination. According to an embodiment, the electronic device may activate the entire second area 1120 as illustrated in FIG. 11 when the ambient illuminance is larger than or equal to a set second value and, when the ambient illuminance is less than the set second value, may activate only the remaining area of the second area 1120 except for the border area 1210, as illustrated in FIG. 12. For example, the set second value may be a value between 400 and 500 lux.

As such, by deactivating the border area 1210 seen from the outside of the second area 1120 and activating only the remaining area, it is possible to prevent the activation for degradation of the second area 1120 from being perceived from the outside even when the ambient illuminance is low.

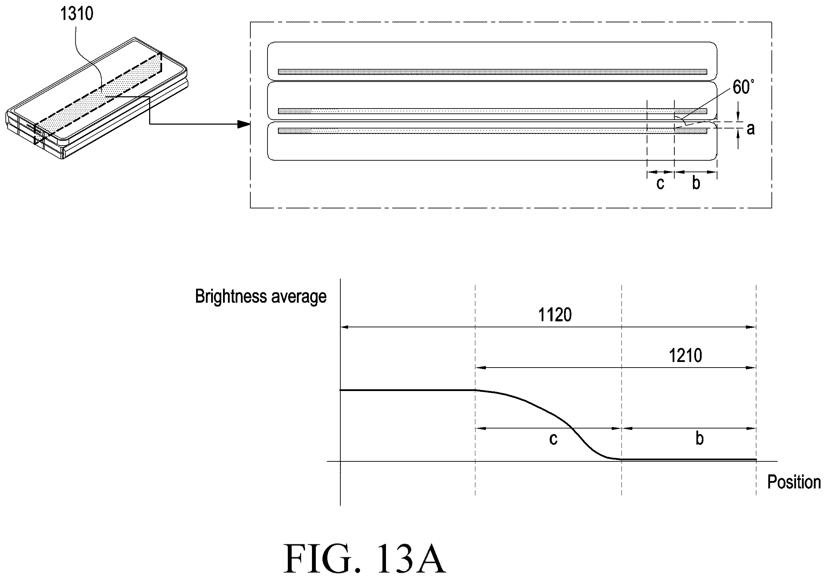

FIG. 13A is a view illustrating an operation of driving an area not exposed to the outside of an electronic device to reduce ghosting due to degradation of a flexible display in an electronic device according to an embodiment.

Referring to FIG. 12, when maintaining the first area 1110 in the standby screen state and activating the second area 1120 except for the border area 1210 in the folded state in which the entire area of the flexible display (e.g., the display member 160 of FIG. 1 or the display 202 of FIG. 2A) is the standby screen state as illustrated in FIG. 12, the electronic device (e.g., the electronic device 101 of FIG. 1, the electronic device 200 of FIG. 2A, or the electronic device 200 of FIG. 2B) may control the brightness of a partial area (e.g., area c) of the border area 1210 including the boundary with the activated area of the bendable area 1210 to sequentially decrease to reduce ghosting caused at the boundary between the bendable area 1210 and the activated area. According to an embodiment, the remaining area (e.g., area b) of the border area 1210 except for the partial area (e.g., area c) in which the brightness sequentially decreases may be deactivated.

According to an embodiment, in the cross section 1310 in which the electronic device in the folded state is vertically cut, area b of the border area 1210 may be an area having a width set from the end of the flexible display. According to an embodiment, area b may be tan 60° of a, which is a distance between the surface of the flexible display and the highest point of the housing in the plane direction of the flexible display.

According to an embodiment, area c of the border area 1210 may be an area having a width set inward from the point where area b ends. According to an embodiment, the brightness of area c may sequentially increase inward from the point where area b ends.

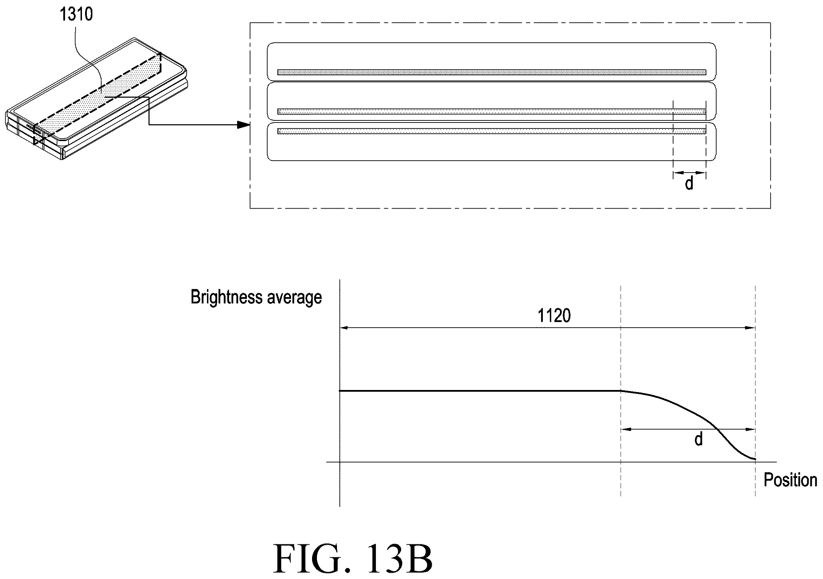

FIG. 13B is a view illustrating an operation of driving an area not exposed to the outside of an electronic device to reduce ghosting due to degradation of a flexible display in an electronic device according to an embodiment.

Referring to FIG. 13B, when the ambient illuminance is larger than or equal to a second set value (e.g., a value between 400 and 500 lux), the electronic device may activate the second area 1120 without an inactivated border area. According to an embodiment, in the cross section 1310 in which the electronic device in the folded state is vertically cut, the electronic device may set area d having a width set from the end of the flexible display, and may sequentially increase the brightness of area d inward from the end of the flexible display.

FIG. 14 is a view illustrating an operation of driving an area not exposed to the outside of an electronic device to reduce ghosting due to degradation of a flexible display in an electronic device according to an embodiment.

Referring to FIG. 14, in the first state in which only the first portion 1410 (exposed portion 1410) of the flexible display (e.g., the display member 160 of FIG. 1 or the display 202 of FIG. 2A) is visually exposed to the outside of the electronic device, and the remaining second portion 1420 (unexposed portion 1420) is not exposed as illustrated in FIG. 7A, the electronic device (e.g., the electronic device 101 of FIG. 1, the electronic device 200 of FIG. 2A, or the electronic device 200 of FIG. 2B) may activate the first portion 1410 at the first brightness and activate the second portion 1420 at the second brightness lower than the first brightness to compensate for the degradation difference from the first portion 1410.

According to an embodiment, to reduce the occurrence of ghosting at the boundary between the first portion 1410 (exposed portion 1410) and the second portion 1420 (unexposed portion 1420), the electronic device may maintain only the first area 1411 of the first portion 1410 at the first brightness and may sequentially decrease, toward the boundary between the first portion 1410 and the second portion 1420, the brightness of the 3-1th area 1412 including the boundary between the first portion 1410 and the second portion 1420 of the first portion 1410. According to an embodiment, to reduce the occurrence of ghosting at the boundary between the first portion 1410 and the second portion 1420, the electronic device may maintain only the second area 1421 of the second portion 1420 at the second brightness and may sequentially decrease, from the boundary between the first portion 1410 and the second portion 1420 toward the second area 1421, the brightness of the 3-2th area 1422 including the boundary between the first portion 1410 and the second portion 1420. According to an embodiment, changes in brightness of the 3-1th area 1412 and the 3-2th area 1422 may be continuous. For example, the brightness of the 3-2th area 1422 may be sequentially decreased from the lowest brightness of the 3-1th area 1412 to the second brightness.

According to an embodiment, the electronic device may activate the second portion 1420 for compensating for the degradation difference from the first portion 1410 only when the ambient illuminance is larger than or equal to a set first value (e.g., a value between 20 and 100 lux).

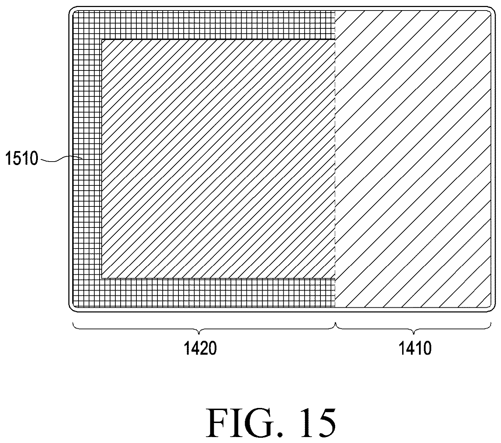

FIG. 15 is a view illustrating an operation of driving an area not exposed to the outside of an electronic device to reduce ghosting due to degradation of a flexible display in an electronic device according to an embodiment.

Referring to FIG. 15, in the first state in which only the first portion 1410 of the flexible display (e.g., the display member 160 of FIG. 1 or the display 202 of FIG. 2A) is visually exposed to the outside of the electronic device, and the remaining second portion 1420 is not exposed as illustrated in FIG. 14, when activating the first portion 1410 at the first brightness and activating the second portion 1420 at the second brightness lower than the first brightness to compensate for the degradation difference from the first area, the electronic device (e.g., the electronic device 101 of FIG. 1, the electronic device 200 of FIG. 2A, or the electronic device 200 of FIG. 2B) may deactivate the border area 1510 seen from the outside, of the second portion 1420, and activate only the remaining area except for the border area 1510 of the second portion 1420.

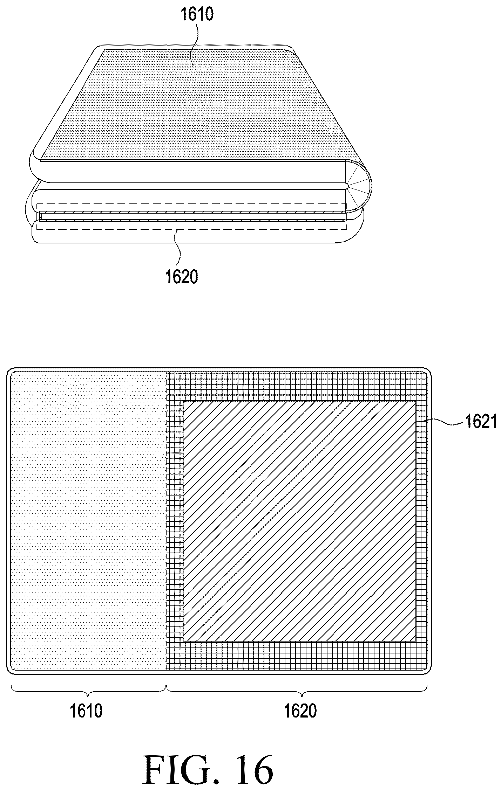

According to an embodiment, the electronic device may activate only the remaining area of the second portion 1420 except for the border area 1510 regardless of ambient illumination. According to an embodiment, the electronic device may activate the entire second portion 1420 as illustrated in FIG. 14 when the ambient illuminance is larger than or equal to a set second value (e.g., a value between 400 and 500 lux) and, when the ambient illuminance is less than the set second value, may activate only the remaining area of the second portion 1420 except for the border area 1510, as illustrated in FIG. 16.

As such, by deactivating the border area 1510 seen from the outside of the second portion 1420 and activating only the remaining area, it is possible to prevent the activation for degradation of the second portion 1420 from being perceived from the outside even when the ambient illuminance is low.

According to an embodiment, the electronic device may control the brightness of the boundary between the border area 1510 and the activated portion to sequentially change in order to reduce ghosting at the boundary between the activated portion and the border area 1510 of the second portion 1420. According to an embodiment, an embodiment in which the brightness of the boundary between the activated portion and the border area 1510 of the second portion 1420 is sequentially changed is the same as illustrated in FIG. 13A, and no repeated descriptions are presented.

According to an embodiment, when the ambient illuminance is larger than or equal to a second set value (e.g., a value between 400 and 500 lux), the electronic device may activate the second portion 1420 without an inactivated border area. According to an embodiment, the brightness of the second portion 1420 may be sequentially increased inward from the end of the flexible display to prevent activation of the second portion 1420 from being perceived from the outside. According to an embodiment, an embodiment of sequentially increasing the brightness of the second portion 1420 inward from the end of the flexible display is the same as illustrated in FIG. 13B, and no repeated descriptions are presented.

FIG. 16 is a view illustrating an operation of driving an area not exposed to the outside of an electronic device to reduce ghosting due to degradation of a flexible display in a state in which an area of the flexible display exposed to the outside of the electronic device is in an inactive state in an electronic device according to an embodiment.

Referring to FIG. 16, in the first state in which the first portion 1610 of the flexible display (e.g., the display member 160 of FIG. 1 or the display 202 of FIG. 2A) is visually exposed to the outside, and the remaining second portion 1620 is not exposed as illustrated in FIG. 7C, when the first area 1610 is deactivated, the electronic device (e.g., the electronic device 101 of FIG. 1, the electronic device 200 of FIG. 2A, or the electronic device 200 of FIG. 2B) may identify the first area 1610 with relatively more degradation due to a high use frequency and the second area 1620 with relatively less degradation due to a low use frequency in the flexible display. For example, in the folded state of the electronic device, since only the first area 1610 of the flexible display is visually exposed to the outside of the electronic device, only the first area 1610 of the flexible display may be activated, and the second area 1620 which is not exposed may be deactivated. Thus, the first area 1610 may have more degradation, and the second area 1620 may have less degradation.

According to an embodiment, in the folded state in which the entire area of the flexible display is in a standby screen state, the first area 1610 may be maintained in the standby screen state, and the second area 1620 may be activated to degrade the second area 1620.

According to an embodiment, the electronic device may determine the brightness and color of an image to be displayed in the activated second area 1620 in the folded state based on the pixel emission accumulated data of the second area 1620.

As such, by activating only the second area 1620, the electronic device may compensate for the degradation difference between the first area 1610 and the second area 1620.

According to an embodiment, the electronic device may activate the second area 1620 only when the ambient illuminance in the folded state is a set first value or more. For example, the set first value may be a value between 20 and 100 lux. According to an embodiment, the electronic device may activate the second area 1620 only when the ambient illuminance is larger than or equal to a value between 20 and 100 lux. As such, by activating the second area 1620 only when the ambient illuminance is the set first value or more, it is possible to prevent the user from perceiving the activation of the second area 1620 although when the second area 1620 is activated.

According to an embodiment, when maintaining the first area 1610 in the standby screen state and activating the second area 1620, the electronic device may deactivate the border area 1621 which is seen from the outside, of the second area 1620 and activate only the remaining area except for the border area 1621 of the second area 1620.

As such, by deactivating the border area 1621 seen from the outside of the second area 1620 and activating only the remaining area, it is possible to prevent the activation for degradation of the second area 1620 from being perceived from the outside even when the ambient illuminance is low.

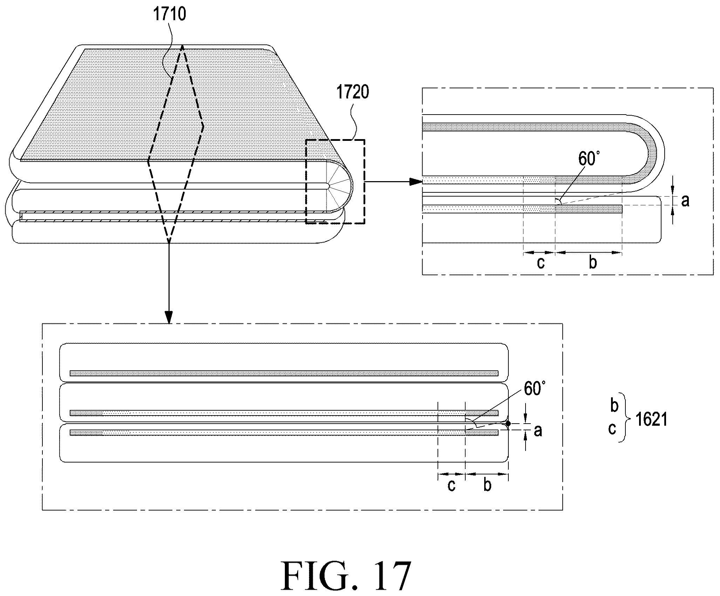

FIG. 17 is a view illustrating an operation of driving an area not exposed to the outside of an electronic device to reduce ghosting due to degradation of a flexible display in a state in which an area of the flexible display exposed to the outside of the electronic device is in an inactive state in an electronic device according to an embodiment.

Referring to FIG. 17, when maintaining the first area 1610 (e.g., the first area 1610 of FIG. 16) in the standby screen state and activating the second area (e.g., the second area 1620 of FIG. 16) except for the border area 1621 in the folded state in which the entire area of the flexible display (e.g., the display member 160 of FIG. 1 or the display 202 of FIG. 2A) is the standby screen state as illustrated in FIG. 12, the electronic device (e.g., the electronic device 101 of FIG. 1, the electronic device 200 of FIG. 2A, or the electronic device 200 of FIG. 2B) may control the brightness of a partial area (e.g., area c) of the border area 1621 including the boundary with the activated area of the bendable area 1621 to sequentially decrease to reduce ghosting caused at the boundary between the bendable area 1621 and the activated area. According to an embodiment, the remaining area (e.g., area b) of the border area 1621 except for the partial area (e.g., area c) in which the brightness sequentially decreases may be deactivated.

According to an embodiment, in the cross section 1710 in which the electronic device in the folded state is vertically cut, area b of the border area 1621 may be an area having a width set from the end of the flexible display. According to an embodiment, in the out-fold area 1720, area b of the border area 1621 may be an area having a width set inward of the second area from the boundary with the first area visually exposed to the outside of the flexible display.

According to an embodiment, area b may be tan 60° of a, which is a distance between the surface of the flexible display and the highest point of the housing in the plane direction of the flexible display.

According to an embodiment, area c of the border area 1621 may be an area having a width set inward from the point where area b ends. According to an embodiment, the brightness of area c may sequentially increase inward from the point where area b ends.

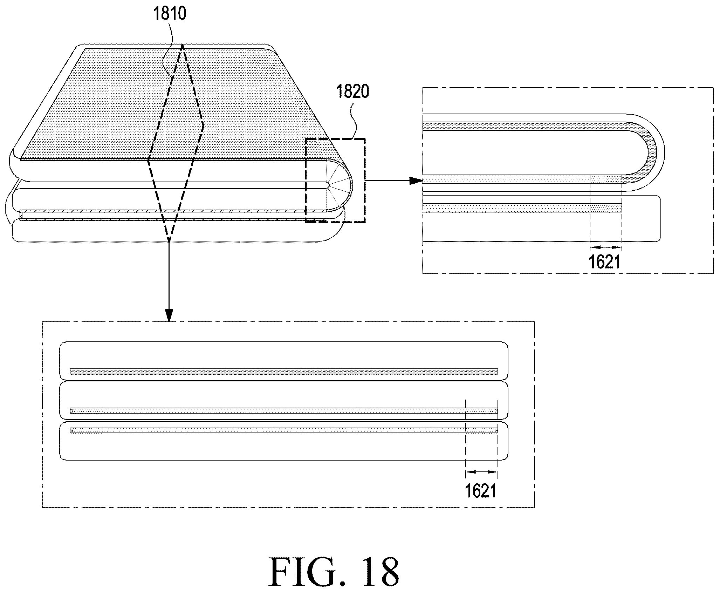

FIG. 18 is a view illustrating an operation of driving an area not exposed to the outside of an electronic device to reduce ghosting due to degradation of a flexible display in a state in which an area of the flexible display exposed to the outside of the electronic device is in an inactive state in an electronic device according to an embodiment.

Referring to FIG. 18, when the ambient illuminance is equal to or larger than the second set value (e.g., a value between 400 and 500 lux), the electronic device (e.g., the electronic device 101 of FIG. 1, the electronic device 200 of FIG. 2A, or the electronic device 200 of FIG. 2B) may sequentially increase the brightness of the border area 1621 inward from the end of the flexible display (e.g., the display member 160 of FIG. 1 or the display 202 of FIG. 2A) when activating the second area 1120.

According to an embodiment, in the cross section 1810 in which the electronic device in the folded state is vertically cut, or in the out-fold area 1720, the electronic device may set a border area 1621 having a width set from the end of the flexible display, and may sequentially increase the brightness of the border area 1621 inward from the end of the flexible display.

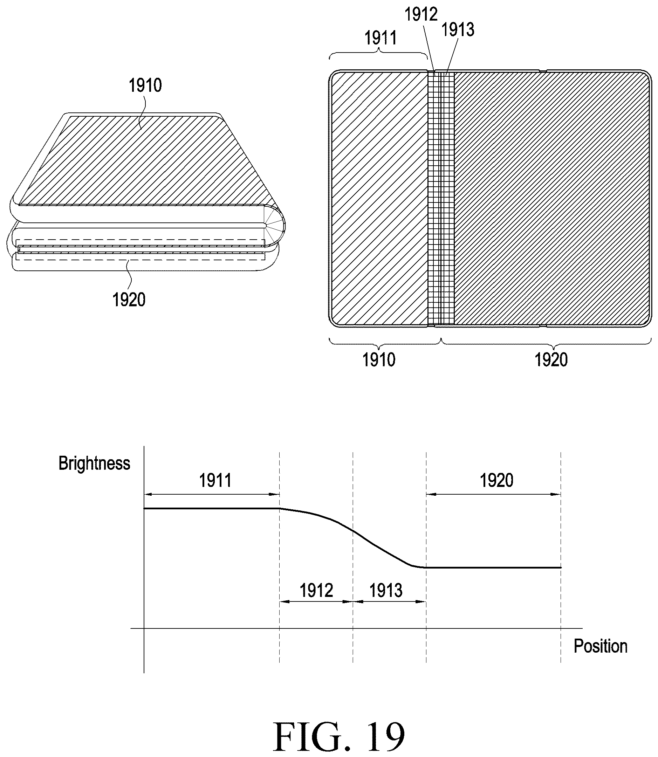

FIG. 19 is a view illustrating an operation of driving an area not exposed to the outside of an electronic device to reduce ghosting due to degradation of a flexible display in a state in which an area of the flexible display exposed to the outside of the electronic device is in an active state in an electronic device according to an embodiment.

Referring to FIG. 19, in the first state in which only the first portion 1910 of the flexible display (e.g., the display member 160 of FIG. 1 or the display 202 of FIG. 2A) is visually exposed to the outside of the electronic device, and the remaining second portion 1920 is not exposed as illustrated in FIG. 7C, the electronic device (e.g., the electronic device 101 of FIG. 1, the electronic device 200 of FIG. 2A, or the electronic device 200 of FIG. 2B) may activate the first portion 1910 at the first brightness and activate the second portion 1920 at the second brightness lower than the first brightness to compensate for the degradation difference from the first area.

According to an embodiment, to reduce the occurrence of ghosting at the boundary between the first portion 1910 and the second portion 1920, the electronic device may maintain only the first area 1911 of the first portion 1910 at the first brightness and may sequentially decrease, away from the first area 1911, the brightness of the 3-1th area 1912 extending from the first area 1911. In an embodiment, to reduce the occurrence of ghosting at the boundary between the first portion 1910 and the second portion 1920, the electronic device may sequentially decrease the brightness of the 3-2th area 1913 extending from the 3-1th area 1912 toward the second portion 1920. According to an embodiment, changes in brightness of the 3-1th area 1912 and the 3-2th area 1922 may be continuous. For example, the brightness of the 3-2th area 1922 may be sequentially decreased from the lowest brightness of the 3-1th area 1912 to the second brightness.

According to an embodiment, the electronic device may activate the second portion 1920 for compensating for the degradation difference from the first portion 1910 only when the ambient illuminance is larger than or equal to a set first value (e.g., a value between 20 and 100 lux).

According to an embodiment, the electronic device may further display a UI (e.g., a shortcut tab or animation effect) set in the 3-1th area 1912. This may prevent the user from perceiving the execution of brightness reduction up to the 3-2th area 1913, which is not visible to the user.

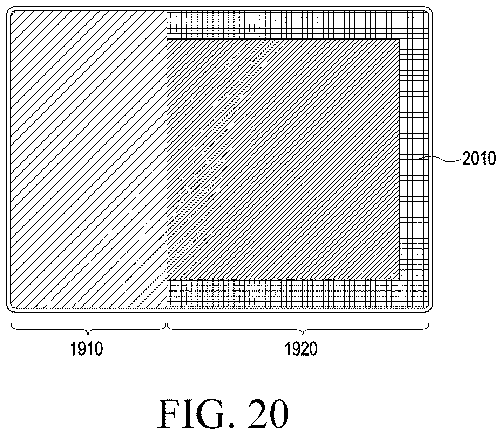

FIG. 20 is a view illustrating an operation of driving an area not exposed to the outside of an electronic device to reduce ghosting due to degradation of a flexible display in a state in which an area of the flexible display exposed to the outside of the electronic device is in an active state in an electronic device according to an embodiment.

Referring to FIG. 20, when operating the first area 1910 at the first brightness and activating the second area 1920 in the flexible display (e.g., the display member 160 of FIG. 1 or the display 202 of FIG. 2A) as illustrated in FIG. 7C, the electronic device (e.g., the electronic device 101 of FIG. 1, the electronic device 200 of FIG. 2A, or the electronic device 200 of FIG. 2B) may deactivate the border area 2010 seen from the outside, of the second area 1920, and activate only the remaining area except for the border area 2010 of the second area 1920.

As such, by deactivating the border area 2010 seen from the outside of the second area 1920 and activating only the remaining area, it is possible to prevent the activation for degradation of the second area 1920 from being perceived from the outside even when the ambient illuminance is low.

FIG. 21 is a view illustrating an operation of periodically moving an image (e.g., UIs or a set image) displayed in an area not exposed to the outside of an electronic device to reduce ghosting due to degradation of a flexible display in an electronic device according to an embodiment.

Referring to FIG. 21, when the second area is activated for degradation in a state in which the second area with a relatively low degree of degradation than the first area with a relatively high degree of degradation, due to a high frequency of being visually exposed to the outside of the flexible display (e.g., the display member 160 of FIG. 1 or the display 202 of FIG. 2A) is not exposed to the outside as illustrated in FIG. 7C, the electronic device (e.g., the electronic device 101 of FIG. 1, the electronic device 200 of FIG. 2A, or the electronic device 200 of FIG. 2B) may deactivate the border area 2110 to prevent the activation for degradation of the second area from being perceived from the outside.

According to an embodiment, the electronic device may activate the deactivated border area 2110 when the value of the ambient illuminance is larger than or equal to a set value in order to reduce the occurrence of ghosting due to a difference in degradation between the activated area and the deactivated boundary area 2110 of the second area.

According to an embodiment, the electronic device may display UIs 2120 and 2130 in a partial area of the deactivated border area 2110 using an always on display (AOD) function in order to reduce the occurrence of ghosting due to the difference in degradation between the deactivated border area 2110 and the activated area of the second area. According to an embodiment, the electronic device periodically moves the positions of the UIs 2120 and 2130, and the UIs 2120 and 2130 may be moved in the border area 2110.

According to an embodiment, the electronic device may display different content according to the positions of the UIs 2120 and 2130. For example, when the UI 2120 is positioned at the top, the UI 2120 may include date and/or time information. According to an embodiment, when the UI 2130 is positioned on the side surface, the UI 2130 may include battery information.

FIG. 22 is a view illustrating an operation of providing highlight through an area not exposed to the outside of an electronic device to reduce ghosting due to degradation of a flexible display in an electronic device according to an embodiment.

Referring to FIG. 22, when the second area is activated for degradation in a state in which the second area with a relatively low degree of degradation than the first area with a relatively high degree of degradation, due to a high frequency of being visually exposed to the outside of the flexible display (e.g., the display member 160 of FIG. 1 or the display 202 of FIG. 2A) is not exposed to the outside as illustrated in FIG. 7C, the electronic device (e.g., the electronic device 101 of FIG. 1, the electronic device 200 of FIG. 2A, or the electronic device 200 of FIG. 2B) may deactivate the border area to prevent the activation for degradation of the second area from being perceived from the outside.

According to an embodiment, the electronic device may display an indicator 2210 (e.g., highlight) by activating the deactivated border area when a notification is received in order to reduce the occurrence of ghosting due to a difference in degradation between the deactivated border area and the activated area of the second area.

According to an embodiment, to enhance the notification effect, when a notification is received, the electronic device may further provide sound and/or vibration together with the display of the indicator 2210.

FIG. 23A is a view illustrating an indicator displayed to lead to a fully unfolded state of a flexible display in an electronic device according to an embodiment.

Referring to FIG. 23, in the folded state in which the entire area of the flexible display (e.g., the display member 160 of FIG. 1 or the display 202 of FIG. 2A) is not exposed to the outside, when switching to the first state in which only the flexible display is visually exposed to the outside of the electronic device, and the remaining second portion is not exposed, as illustrated in FIG. 7A, the electronic device (e.g., the electronic device 101 of FIG. 1, the electronic device 200 of FIG. 2A, or the electronic device 200 of FIG. 2B) may display an indicator 2320, 2321, or 2322 to lead to unfolding for exposing the entire area of the flexible display so as to compensate for the degradation difference between the first portion and the second portion. According to an embodiment, in the first state, the electronic device may display the indicator 2320, 2321, or 2322 in the area close to the boundary with the second portion, of the first portion. For example, in the first state, the electronic device may display a highlight 2320, an arrow 2321, or a preview screen 2322 in the unfolded state in the area close to the boundary with the second portion, of the first portion.

FIG. 23B is a view illustrating a screen processing operation for leading to a fully unfolded state of a flexible display in an electronic device according to an embodiment.

Referring to FIG. 23B, the electronic device may lead to unfolding so that the entire area of the flexible display is exposed by displaying an incomplete image in the first portion activated in the first state.

For example, the electronic device may lead to unfolding so that the entire area of the flexible display is exposed by displaying a screen 2330 with reduced brightness, displaying a blurred screen 2331, displaying only a portion of the entire screen 2332, or displaying a black screen 2333, in the first portion.

FIG. 24 is a view illustrating an operation of varying luminance depending on a degree of degradation for each area to reduce ghosting due to degradation of a flexible display in an electronic device according to an embodiment.

Referring to FIG. 24, in the first state in which only the first portion 2410 of the flexible display (e.g., the display member 160 of FIG. 1 or the display 202 of FIG. 2A) is visually exposed to the outside of the electronic device, and the remaining second portion 2420 is not exposed as illustrated in FIG. 7A, when switching to the unfolded state in which the entire area of the flexible display including the second portion 2420 is exposed, the electronic device (e.g., the electronic device 101 of FIG. 1, the electronic device 200 of FIG. 2A, or the electronic device 200 of FIG. 2B) may control to operate so that the brightness of the first portion 2410 with a relatively high degree of degradation due to a high use frequency is lower than the brightness of the second portion 2420 with a relatively low degree of degradation due to a low use frequency.

According to an embodiment, the electronic device may identify the degree of degradation of each of the first portion 2410 and the second portion 2420 based on the accumulated emission data of each of the first portion 2410 and the second portion 2420 and control the brightness of the first portion 2410 and the brightness of the second portion 2420 to be different based on the difference in degree of degradation. According to an embodiment, the electronic device may control the difference between the brightness of the first portion 2410 and the brightness of the second portion 2420 to be less than 10%.

According to an embodiment, the electronic device may provide the user with a guide for adjusting the brightness of the first portion 2410 and/or the second portion 2420. For example, the electronic device may provide a guide to inform the user that it is required to set the brightnesses of the first portion 2410 and the second portion 2420 to differ to compensate for the degradation difference and to set the brightnesses of the first portion 2410 and the second portion 2420 to differ within a range in which the user may use it with a sense of incongruity.

As such, by controlling an area with a relatively low degree of degradation to be bright, it is possible to compensate for a degradation difference.

FIG. 25 is a view illustrating an indicator displayed to lead to a fully unfolded state of a flexible display in an electronic device according to an embodiment.

Referring to FIG. 25, in the first state in which only the first portion of the flexible display (e.g., the display member 160 of FIG. 1 or the display 202 of FIG. 2A) is visually exposed to the outside of the electronic device, and the remaining second portion is not exposed as illustrated in FIG. 7C, when the first portion switches from the deactivated state to the activated state, the electronic device (e.g., the electronic device 101 of FIG. 1, the electronic device 200 of FIG. 2A, or the electronic device 200 of FIG. 2B) display an indicator 2510, 2511, or 2512 to lead to unfolding to expose the entire area of the flexible display so as to compensate for the degradation difference between the first portion and the second portion. According to an embodiment, in the first state, the electronic device may display the indicator 2510, 2511, or 2512 in the area close to the area bent by out-folding, of the flat area of the first portion. For example, in the first state, the electronic device may display a highlight 2510, an arrow 2511, or a preview screen 2512 in the unfolded state in the area close to the area bent by out-folding, of the flat area of the first portion.

FIG. 26 is a view illustrating an operation of varying luminance depending on a degree of degradation for each area to reduce ghosting due to degradation of a flexible display in an electronic device according to an embodiment.

Referring to FIG. 26, in the first state in which only the first portion 2610 of the flexible display (e.g., the display member 160 of FIG. 1 or the display 202 of FIG. 2A) is visually exposed to the outside of the electronic device, and the remaining second portion 2620 is not exposed as illustrated in FIG. 7C, when switching to the unfolded state in which the entire area of the flexible display including the second portion 2620 is exposed, the electronic device (e.g., the electronic device 101 of FIG. 1, the electronic device 200 of FIG. 2A, or the electronic device 200 of FIG. 2B) may control to operate so that the brightness of the first portion 2610 with a relatively high degree of degradation due to a high use frequency is lower than the brightness of the second portion 2620 with a relatively low degree of degradation due to a low use frequency.

According to an embodiment, the electronic device may identify the degree of degradation of each of the first portion 2610 and the second portion 2620 based on the accumulated emission data of each of the first portion 2610 and the second portion 2620 and control the brightness of the first portion 2610 and the brightness of the second portion 2620 to be different based on the difference in degree of degradation. According to an embodiment, the electronic device may control the difference between the brightness of the first portion 2610 and the brightness of the second portion 2620 to be less than 10%.

According to an embodiment, the electronic device may provide the user with a guide for adjusting the brightness of the first portion 2610 and/or the second portion 2620. For example, the electronic device may provide a guide to inform the user that it is required to set the brightnesses of the first portion 2610 and the second portion 2620 to differ to compensate for the degradation difference and to set the brightnesses of the first portion 2610 and the second portion 2620 to differ within a range in which the user may use it with a sense of incongruity.

As such, by controlling an area with a relatively low degree of degradation to be bright, it is possible to compensate for a degradation difference.

FIG. 27 is a view illustrating an operation of periodically moving a boundary between an active area and an inactive area of an area to reduce ghosting due to degradation of a flexible display in an electronic device according to an embodiment.

Referring to FIG. 27, the electronic device (e.g., the electronic device 101 of FIG. 1, the electronic device 200 of FIG. 2A, or the electronic device 200 of FIG. 2B) may move the position of the boundary 2730 in units of pixels at a set period to reduce ghosting at the boundary 2730 between the first area 2710 with a relatively high degree of degradation and the second area 2720 with a relatively low degree of degradation in the flexible display (e.g., the display member 160 of FIG. 1 or the display 202 of FIG. 2A). For example, the electronic device may move the boundary at a first position 2731 to a second position 2732, which is shifted by a set number of pixels (e.g., one pixel), to the left, or to a third position 2733, which is shifted by a set number of pixels (e.g., one pixel), to the right, at a set period.

As such, as the boundary is moved at a set period, the sharpness of the boundary of the ghost image may be decreased.

FIG. 28 is a view illustrating an operation of adjusting a gradation range applied to a flexible display to reduce ghosting due to degradation of the flexible display in an electronic device according to an embodiment.

Referring to FIG. 28, the electronic device (e.g., the electronic device 101 of FIG. 1, the electronic device 200 of FIG. 2A, or the electronic device 200 of FIG. 2B) may compensate for a brightness reduction due to degradation through image quality correction in the first area with a relatively high degree of degradation in the flexible display (e.g., the display member 160 of FIG. 1 or the display 202 of FIG. 2A). For example, the electronic device may determine an image contrast ratio by analyzing the image histogram and, when the contrast ratio is low, perform image quality correction by expanding the distribution to include the gradations in all the ranges. For example, the electronic device may expand the gradation 2810 in a first range to a gradation 2820 in a second range to increase the contrast ratio of the image, thereby performing image quality correction.

As such, it is possible to compensate for the brightness difference from the area with a relatively low degree of degradation by performing image quality correction on the area with worse degradation.

FIG. 29 is a view illustrating an operation of adjusting the brightness for each area of a flexible display to reduce ghosting due to degradation of the flexible display when an electronic device is a rollable electronic device according to an embodiment.

Referring to FIG. 29, when the electronic device (e.g., the electronic device 101 of FIG. 1) is a rollable device, the electronic device may sequentially decrease the brightness of a set area between the activated first area 2910 and the deactivated second area 2920 from the first area 2910 toward the second area 2920 in a state in which only the first area 2910 is exposed, and the second area 2920 is not exposed, so as to reduce ghosting at the boundary between the first area 2910 with a relatively high degree of degradation due to a high use frequency and the second area 2920 with a relatively low degree of degradation.

According to an embodiment, the electronic device may activate the second area 2920 to degrade it in a state in which only the first area 2910 is exposed, and the second area 2920 is not exposed, thereby compensating for the difference in degradation with the first area 2910.

FIG. 30A is a view illustrating an operation of adjusting the brightness for each area of a flexible display to reduce ghosting due to degradation of the flexible display when an electronic device is a bendable electronic device according to an embodiment.

FIG. 30B is a view illustrating an operation of adjusting the brightness for each area of a flexible display to reduce ghosting due to degradation of the flexible display when an electronic device is a bendable electronic device according to an embodiment.

Referring to FIG. 30A, when the electronic device (e.g., the electronic device 101 of FIG. 1) is a bendable device, the electronic device may include a first display 3010 disposed in the entire area of one surface of the electronic device and a second display 3020 disposed in a partial area of another surface of the electronic device.

According to an embodiment, when partial areas of two opposite ends of the electronic device are bent to overlap, the first display 3010 may be disposed on an inner surface, a partial area of one end of the first display 3010 may overlap the housing of the other end, and the second display 3020 may be disposed on the outer surface.

Referring to FIG. 30B, in a state in which the partial areas of two opposite ends of the electronic device are bent to overlap each other, the overlapping portion may be bent in the direction opposite to the bending direction, so that the partial area 3011 of the first display overlapping the housing of the other end may be exposed. According to an embodiment, the electronic device may activate only a partial area 3011 of the first display and deactivate the remaining area of the first display.

According to an embodiment, by out-folding the bar-shaped electronic device, only the partial area 3011 of the first display may be activated.

According to an embodiment, when the bar-shaped electronic device is out-folded, only the partial area 3011 may be activated, or the remaining partial area 3012 may be activated, or all of the flat areas 3011 and 3012 except for the bent area in the first display may be activated, according to the user's usage pattern.

As such, when the electronic device is a bendable device, the use frequency for each display area may vary depending on various usage patterns, so that the degree of degradation may differ for each display area.

According to an embodiment, the electronic device may identify the degree of degradation for each area based on usage history data for each display area and sequentially decrease the brightness of a set area between the activated first area and the deactivated second area from the first area toward the second area so as to reduce ghosting due to the degradation difference.

According to an embodiment, the electronic device may activate the second area to degrade it in a state in which only the first area is exposed, and the second area is not exposed, thereby compensating for the difference in degradation with the first area.

According to an embodiment, an electronic device may comprise a foldable housing including a first housing part, a second housing part, and a third housing part, a flexible display disposed across the first housing part, the second housing part, and the third housing part, a sensor including sensing circuitry configured to detect a change between a folded state, a partially unfolded state, and a fully unfolded state of the foldable housing, at least one processor including a processing circuit, and memory storing instructions.

According to an embodiment, the instructions may, when executed by the at least one processor individually or collectively, cause the electronic device to, based on detecting a change from the folded state of the foldable housing to the partially unfolded state, control a brightness of a first area of the flexible display to be a first brightness.

According to an embodiment, the instructions may, when executed by the at least one processor individually or collectively, cause the electronic device to, based on detecting a change from the folded state of the foldable housing to the partially unfolded state, deactivate a second area of the flexible display.

According to an embodiment, the instructions may, when executed by the at least one processor individually or collectively, cause the electronic device to control a brightness of a third area disposed between the first area and the second area to be sequentially lowered from a first boundary between the first area and the third area to a second boundary between the third area and the second area.

According to an embodiment, the third area may include a 3-1th area extending from the first area and a 3-2th area extending from the 3-1th area to the second area.

According to an embodiment, the partially unfolded state may be a first state that a first portion of the flexible display is visually exposed to an outside of the electronic device, and a second portion of the flexible display other than the first portion is not visually exposed to the outside of the electronic device,

According to an embodiment, the first area may be a partial area of the first portion.

According to an embodiment, the second area may be at least a partial area of the second portion.

According to an embodiment, the instructions may, when executed by the at least one processor individually or collectively, cause the electronic device to, as part of controlling the brightness of the third area to be sequentially lowered, control the brightness of the 3-1th area to be sequentially lowered based on a first method from the first boundary to a third boundary between the 3-1th area and the 3-2th area.

According to an embodiment, the instructions may, when executed by the at least one processor individually or collectively, cause the electronic device to, as part of controlling the brightness of the third area to be sequentially lowered, control the brightness of the 3-2th area to be sequentially lowered from the third boundary to the second boundary based on a second method different from the first method.

According to an embodiment, the electronic device may further comprise a first hinge structure rotatably connecting the first housing part and the second housing part, and a second hinge structure rotatably connecting the first housing part and the third housing part.

According to an embodiment, the third area may be a bendable area corresponding to the first hinge structure or the second hinge structure, in the flexible display.

According to an embodiment, based on a hinge structure corresponding to the third area being an in-fold structure, in the first state, the 3-1th area may be included in the unfolded bendable area of the first portion.

According to an embodiment, based on the hinge structure corresponding to the third area being an in-fold structure, in the first state, the 3-2th area may be included in the unfolded bendable area of the second portion.

According to an embodiment, the electronic device may further comprise a first hinge structure rotatably connecting the first housing part and the second housing part, and a second hinge structure rotatably connecting the first housing part and the third housing part.

According to an embodiment, the third area may be a bendable area corresponding to the first hinge structure or the second hinge structure, in the flexible display.

According to an embodiment, based on a hinge structure corresponding to the third area being an out-fold structure: in the first state, the 3-1th area may be included in the bendable area that may be out-folded, of the first portion, and may be an area that may be visible at a specific viewing angle where the first area may be visible.

According to an embodiment, based on the hinge structure corresponding to the third area being an out-fold structure, in the first state, the 3-2 area may be included in the bendable area that may be out-folded, of the first portion, and may be an area that may be not visible at the specific viewing angle.

According to an embodiment, the first method may be a method for controlling the brightness of the 3-1th area to be sequentially lowered from the first brightness at a set ratio of the first brightness, from the first boundary to the third boundary.

According to an embodiment, the second method may be a method displaying a set image in the 3-2th area.

According to an embodiment, the set image may include a portion having the first brightness and a portion having a minimum brightness, and in the set image, an average brightness of a pixel line parallel to the third boundary may be sequentially lowered from the set ratio of the first brightness to the minimum brightness, from the third boundary to the second boundary.

According to an embodiment, the set image may include a pattern including the portion having the first brightness and the portion having the minimum brightness.

According to an embodiment, the instructions may, when executed by the at least one processor individually or collectively, cause the electronic device to periodically move a position of the pattern in the 3-2th area.

According to an embodiment, the instructions may, when executed by the at least one processor individually or collectively, cause the electronic device to, based on usage history data for a plurality of areas of the flexible display, identify a degradation level in the plurality of areas of the flexible display.

According to an embodiment, the instructions may, when executed by the at least one processor individually or collectively, cause the electronic device to, based on the degradation level, determine at least one of the set ratio or the set image.

According to an embodiment, the instructions may, when executed by the at least one processor individually or collectively, cause the electronic device to activate the second area.

According to an embodiment, the instructions may, when executed by the at least one processor individually or collectively, cause the electronic device to operate the second area at a second brightness lower than the first brightness.

According to an embodiment, the electronic device may further comprise an illuminance sensor.

According to an embodiment, the instructions may, when executed by the at least one processor individually or collectively, cause the electronic device to, based on a value of an ambient illuminance sensed by the illuminance sensor being less than a set value, deactivate at least a portion of a border area of the second area.

According to an embodiment, the instructions may, when executed by the at least one processor individually or collectively, cause the electronic device to deactivate the at least a portion of the border area so that a brightness of the border area may be sequentially lowered from a boundary with an activated area of the second area.

According to an embodiment, the instructions may, when executed by the at least one processor individually or collectively, cause the electronic device to periodically move a position of a specific image in the border area.

According to an embodiment, an electronic device may comprise a foldable housing including a first housing part, a second housing part, and a third housing part, a flexible display disposed on the first housing part, the second housing part, and the third housing part, a sensor including sensing circuitry detecting a folding state of the foldable housing, at least one processor, and memory storing instructions. The instructions may, when executed by the at least one processor individually or collectively, cause the electronic device to perform the following operations.

According to an embodiment, the instructions may, when executed by the at least one processor individually or collectively, cause the electronic device to identify a first area where a degradation level may be a set value or more and a second area where the degradation level may be less than the set value, in the flexible display.

According to an embodiment, the instructions may, when executed by the at least one processor individually or collectively, cause the electronic device to activate the second area based on identifying that a folding state of the electronic device may be a state in which the second area may be deactivated by the sensor.

According to an embodiment, the instructions may, when executed by the at least one processor individually or collectively, cause the electronic device to drive the second area in a set brightness.

According to an embodiment, a method for controlling an electronic device including a foldable housing including a first housing part, a second housing part, and a third housing part and a flexible display may comprise, based on detecting a change from the folded state of the foldable housing to the partially unfolded state, controlling a brightness of a first area of the flexible display to be a first brightness.

According to an embodiment, the method for controlling the electronic device may comprise, based on detecting a change from the folded state of the foldable housing to the partially unfolded state, deactivating a second area of the flexible display.

According to an embodiment, the method for controlling the electronic device may comprise controlling a brightness of a third area disposed between the first area and the second area to be sequentially lowered from a first boundary between the first area and the third area to a second boundary between the third area and the second area.

According to an embodiment, the third area may include a 3-1th area extending from the first area and a 3-2th area extending from the 3-1th area to the second area.

According to an embodiment, the method for controlling the electronic device may comprise, as part of controlling the brightness of the third area to be sequentially lowered, control the brightness of the 3-1th area to be sequentially lowered based on a first method from the first boundary to a third boundary between the 3-1th area and the 3-2th area.

According to an embodiment, the partially unfolded state may be a first state that a first portion of the flexible display is visually exposed to an outside of the electronic device, and a second portion of the flexible display other than the first portion is not visually exposed to the outside of the electronic device,

According to an embodiment, the first area may be a partial area of the first portion.

According to an embodiment, the second area may be at least a partial area of the second portion.

According to an embodiment, the method for controlling the electronic device may comprise, as part of controlling the brightness of the third area to be sequentially lowered, controlling the brightness of the 3-2th area to be sequentially lowered from the third boundary to the second boundary based on a second method different from the first method.

According to an embodiment, the third area may be a bendable area corresponding to a first hinge structure rotatably connecting the first housing part and the second housing part or a second hinge structure rotatably connecting the first housing part and the third housing part in the flexible display.

According to an embodiment, based on a hinge structure corresponding to the third area being an in-fold structure, in the first state, the 3-1th area may be included in the unfolded bendable area of the first portion.

According to an embodiment, based on the hinge structure corresponding to the third area being an in-fold structure, in the first state, the 3-2th area may be included in the unfolded bendable area of the second portion.

According to an embodiment, the third area may be a bendable area corresponding to a first hinge structure rotatably connecting the first housing part and the second housing part or a second hinge structure rotatably connecting the first housing part and the third housing part in the flexible display.

According to an embodiment, based on a hinge structure corresponding to the third area being an out-fold structure: in the first state, the 3-1th area may be included in the bendable area that may be out-folded, of the first portion, and may be an area that may be visible at a specific viewing angle where the first area may be visible.

According to an embodiment, in the first state, the 3-2 area may be included in the bendable area that is out-folded, of the first portion, and may be an area that is not visible at the specific viewing angle.

According to an embodiment, the first method may be a method for controlling the brightness of the 3-1th area to be sequentially lowered from the first brightness at a set ratio of the first brightness, from the first boundary to the third boundary.

According to an embodiment, the second method may be a method displaying a set image in the 3-2th area.

According to an embodiment, the set image may include a portion having the first brightness and a portion having a minimum brightness, and in the set image, an average brightness of a pixel line parallel to the third boundary may be sequentially lowered from the set ratio of the first brightness to the minimum brightness, from the third boundary to the second boundary.

According to an embodiment, the set image may include a pattern including the portion having the first brightness and the portion having the minimum brightness.

According to an embodiment, controlling the brightness of the 3-2th area to be sequentially lowered based on the second method may periodically move a position of the pattern in the 3-2th area.

According to an embodiment, controlling the brightness of the third area to be sequentially lowered may, based on usage history data for a plurality of areas of the flexible display, identify a degradation level in the plurality of areas of the flexible display.

According to an embodiment, controlling the brightness of the third area to be sequentially lowered may, based on the degradation level, determines at least one of the set ratio or the set image.

According to an embodiment, the method for controlling the electronic device may further comprise activating the second area.

According to an embodiment, in the method for controlling the electronic device, controlling the brightness of the third area to be sequentially lowered may further include driving the second area at a second brightness lower than the first brightness.

According to an embodiment, the method for controlling the electronic device may further comprise deactivating at least portion of a border area of the second area based on a value of an ambient illuminance sensed by an illuminance sensor of the electronic device being less than a set value.

According to an embodiment, in a non-transitory, computer-readable recording medium storing one or more programs, the one or more programs may include instructions that cause an electronic device, including a foldable housing including a first housing part, a second housing part, and a third housing part and a flexible display, to, based on detecting a change from the folded state of the foldable housing to the partially unfolded state: control a brightness of a first area of the flexible display to be a first brightness.

According to an embodiment, the one or more programs may include instructions that cause the electronic device to, based on detecting a change from the folded state of the foldable housing to the partially unfolded state, deactivate a second area of the flexible display.

According to an embodiment, the one or more programs may include instructions that cause the electronic device to control a brightness of a third area disposed between the first area and the second area to be sequentially lowered from a first boundary between the first area and the third area to a second boundary between the third area and the second area.

According to an embodiment, the third area may include a 3-1th area extending from the first area and a 3-2th area extending from the 3-1th area to the second area.

According to an embodiment, the one or more programs may include instructions that cause the electronic device to, as part of controlling the brightness of the third area to be sequentially lowered, control the brightness of the 3-1th area to be sequentially lowered based on a first method from the first boundary to a third boundary between the 3-1th area and the 3-2th area.

According to an embodiment, the partially unfolded state may be a first state that a first portion of the flexible display is visually exposed to an outside of the electronic device, and a second portion of the flexible display other than the first portion is not visually exposed to the outside of the electronic device,

According to an embodiment, the first area may be a partial area of the first portion.

According to an embodiment, the second area may be at least a partial area of the second portion.

According to an embodiment, the one or more programs may include instructions that cause the electronic device to, as part of controlling the brightness of the third area to be sequentially lowered, control the brightness of the 3-2th area to be sequentially lowered from the third boundary to the second boundary based on a second method different from the first method.

According to an embodiment, the electronic device may further comprise a first hinge structure rotatably connecting the first housing part and the second housing part, and a second hinge structure rotatably connecting the first housing part and the third housing part.

According to an embodiment, the third area may be a bendable area corresponding to the first hinge structure or the second hinge structure, in the flexible display.

According to an embodiment, based on a hinge structure corresponding to the third area being an in-fold structure, in the first state, the 3-1th area may be included in the unfolded bendable area of the first portion.

According to an embodiment, based on the hinge structure corresponding to the third area being an in-fold structure, in the first state, the 3-2th area may be included in the unfolded bendable area of the second portion.

According to an embodiment, the electronic device may further comprise a first hinge structure rotatably connecting the first housing part and the second housing part, and a second hinge structure rotatably connecting the first housing part and the third housing part.

According to an embodiment, the third area may be a bendable area corresponding to the first hinge structure or the second hinge structure, in the flexible display.

According to an embodiment, based on a hinge structure corresponding to the third area being an out-fold structure: in the first state, the 3-1th area may be included in the bendable area that may be out-folded, of the first portion, and may be an area that may be visible at a specific viewing angle where the first area may be visible.

According to an embodiment, based on the hinge structure corresponding to the third area being an out-fold structure, in the first state, the 3-2 area may be included in the bendable area that may be out-folded, of the first portion, and may be an area that may be not visible at the specific viewing angle.

According to an embodiment, the first method may be a method for controlling the brightness of the 3-1th area to be sequentially lowered from the first brightness at a set ratio of the first brightness, from the first boundary to the third boundary.

According to an embodiment, the second method may be a method displaying a set image in the 3-2th area.

According to an embodiment, the set image may include a portion having the first brightness and a portion having a minimum brightness, and in the set image, an average brightness of a pixel line parallel to the third boundary may be sequentially lowered from the set ratio of the first brightness to the minimum brightness, from the third boundary to the second boundary.

According to an embodiment, the set image may include a pattern including the portion having the first brightness and the portion having the minimum brightness.

According to an embodiment, the one or more programs may include instructions that cause the electronic device to periodically move a position of the pattern in the 3-2th area.

According to an embodiment, the one or more programs may include instructions that cause the electronic device to, based on usage history data for a plurality of areas of the flexible display, identify a degradation level in the plurality of areas of the flexible display.

According to an embodiment, the one or more programs may include instructions that cause the electronic device to, based on the degradation level, determine at least one of the set ratio or the set image.

According to an embodiment, the one or more programs may include instructions that cause the electronic device to activate the second area.

According to an embodiment, the one or more programs may include instructions that cause the electronic device to drive the second area at a second brightness lower than the first brightness.

According to an embodiment, the electronic device may further comprise an illuminance sensor.

According to an embodiment, the one or more programs may include instructions that cause the electronic device to deactivate at least portion of a border area of the second area based on a value of an ambient illuminance sensed by an illuminance sensor of the electronic device being less than a set value.

According to an embodiment, the one or more programs may include instructions that cause the electronic device to deactivate the at least a portion of the border area so that a brightness of the border area may be sequentially lowered from a boundary with an activated area of the second area.

According to an embodiment, the one or more programs may include instructions that cause the electronic device to periodically move a position of a specific image in the border area and display the same.

According to an embodiment, in a non-transitory, computer-readable recording medium storing one or more programs, the one or more programs may include instructions that cause an electronic device, including a foldable housing including a first housing part, a second housing part, and a third housing part and a flexible display, to identify a first area where a degradation level may be a set value or more and a second area where the degradation level may be less than the set value, in the flexible display.

According to an embodiment, the one or more programs may include instructions that cause the electronic device to activate the second area based on identifying that a folding state of the electronic device may be a state in which the second area may be deactivated by the sensor.

According to an embodiment, the one or more programs may include instructions that cause the electronic device to drive the second area at a set brightness.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
a foldable housing including a first housing part, a second housing part, and a third housing part;
a flexible display disposed across the first housing part, the second housing part, and the third housing part;
a sensor including sensing circuitry configured to detect a change between a folded state, a partially unfolded state, and a fully unfolded state of the foldable housing;
at least one processor including a processing circuit; and
memory storing instructions;
wherein the instructions, when executed by the at least one processor individually or collectively, cause the electronic device to:
based on detecting a change from the folded state to the partially unfolded state:
control a brightness of a first area of the flexible display to be a first brightness,
deactivate a second area of the flexible display, and
control a brightness of a third area disposed between the first area and the second area to be sequentially lowered from a first boundary between the first area and the third area to a second boundary between the third area and the second area, wherein the third area includes a 3-1th area extending from the first area and a 3-2th area extending from the 3-1th area to the second area;
as part of controlling the brightness of the third area to be sequentially lowered,
control, based on a first method, the brightness of the 3-1th area to be sequentially lowered from the first boundary to a third boundary between the 3-1th area and the 3-2th area; and
control, based on a second method different from the first method, the brightness of the 3-2th area to be sequentially lowered from the third boundary to the second boundary.

2. The electronic device of claim 1,
wherein the partially unfolded state is a first state in which a first portion of the flexible display is visually exposed to an outside of the electronic device, and in which a second portion of the flexible display other than the first portion is not visually exposed to the outside of the electronic device,
wherein the first area is a partial area of the first portion, and
wherein the second area is at least a partial area of the second portion.

3. The electronic device of claim 2, further comprising:
a first hinge structure rotatably connecting the first housing part and the second housing part; and
a second hinge structure rotatably connecting the first housing part and the third housing part,
wherein the third area is a bendable area corresponding to the first hinge structure or the second hinge structure, in the flexible display,
wherein based on a hinge structure corresponding to the third area being an in-fold structure:
in the first state, the 3-1th area is part of the first portion and is included in the bendable area that is unfolded, and
in the first state, the 3-2th area is part of the second portion and is included in the bendable area that is unfolded.

4. The electronic device of claim 2, further comprising:
a first hinge structure rotatably connecting the first housing part and the second housing part; and
a second hinge structure rotatably connecting the first housing part and the third housing part,
wherein the third area is a bendable area corresponding to the first hinge structure or the second hinge structure, in the flexible display,
wherein based on a hinge structure corresponding to the third area being an out-fold structure:
in the first state, the 3-1th area is part of the first portion and is included in the bendable area that is out-folded, and is an area that is visible at a specific viewing angle at which the first area is visible, and
in the first state, the 3-2 area is part of the first portion and is included in the bendable area that is out-folded, and is an area that is not visible at the specific viewing angle.

5. The electronic device of claim 1,
wherein the first method is a method for controlling the brightness of the 3-1th area to be sequentially lowered from the first brightness at a set ratio of the first brightness, from the first boundary to the third boundary,
wherein the second method is a method displaying a set image in the 3-2th area, wherein the set image includes a portion having the first brightness and a portion having a minimum brightness, and wherein in the set image, an average brightness of a pixel line parallel to the third boundary is sequentially lowered from the set ratio of the first brightness to the minimum brightness, from the third boundary to the second boundary.

6. The electronic device of claim 5,
wherein the set image includes a pattern including the portion having the first brightness and the portion having the minimum brightness, and
wherein the instructions, when executed by the at least one processor individually or collectively, cause the electronic device to:
periodically move a position of the pattern in the 3-2th area.

7. The electronic device of claim 5,
wherein the instructions, when executed by the at least one processor individually or collectively, cause the electronic device to:
based on usage history data for a plurality of areas of the flexible display, identify a degradation level in the plurality of areas of the flexible display, and
based on the degradation level, determine at least one of the set ratio or the set image.

8. The electronic device of claim 1,
wherein the instructions, when executed by the at least one processor individually or collectively, cause the electronic device to:
activate the second area, and
operate the second area at a second brightness lower than the first brightness.

9. The electronic device of claim 8, further comprising
an illuminance sensor,
wherein the instructions, when executed by the at least one processor individually or collectively, cause the electronic device to:
based on a value of an ambient illuminance sensed by the illuminance sensor being less than a set value, deactivate at least a portion of a border area of the second area.

10. The electronic device of claim 9,
wherein the instructions, when executed by the at least one processor individually or collectively, cause the electronic device to:
deactivate the at least a portion of the border area so that a brightness of the border area is sequentially lowered from a boundary with an activated area of the second area.

11. An electronic device, comprising:
a foldable housing including a first housing part, a second housing part, and a third housing part;
a flexible display disposed on the first housing part, the second housing part, and the third housing part;
a sensor including sensing circuitry detecting a folding state of the foldable housing;
at least one processor; and
memory storing instructions, wherein the instructions, when executed by the at least one processor individually or collectively, cause the electronic device to:
identify a first area where a degradation level is a set value or more and a second area where the degradation level is less than the set value, in the flexible display;
activate the second area based on identifying that a folding state of the electronic device is a state in which the second area is deactivated by the sensor; and
drive the second area in a set brightness.

12. A method for controlling an electronic device including a foldable housing including a first housing part, a second housing part, and a third housing part and a flexible display, the method comprising:
based on detecting a change from a folded state of the foldable housing to a partially unfolded state:
controlling a brightness of a first area of the flexible display to be a first brightness;
deactivating a second area of the flexible display;
controlling a brightness of a third area disposed between the first area and the second area to be sequentially lowered from a first boundary between the first area and the third area to a second boundary between the third area and the second area, wherein the third area includes a 3-1th area extending from the first area and a 3-2th area extending from the 3-1th area to the second area;
as part of controlling the brightness of the third area to be sequentially lowered,
controlling, based on a first method, the brightness of the 3-1th area to be sequentially lowered from the first boundary to a third boundary between the 3-1th area and the 3-2th area; and
controlling, based on a second method different from the first method, the brightness of the 3-2th area to be sequentially lowered from the third boundary to the second boundary.

13. The method of claim 12,
wherein the partially unfolded state is a first state in which a first portion of the flexible display is visually exposed to an outside of the electronic device, and in which a second portion of the flexible display other than the first portion is not visually exposed to the outside of the electronic device,
wherein the first area is a partial area of the first portion, and
wherein the second area is at least a partial area of the second portion.

14. The method of claim 13,
where the third area is a bendable area corresponding to a first hinge structure rotatably connecting the first housing part and the second housing part or a second hinge structure rotatably connecting the first housing part and the third housing part in the flexible display, and
wherein based on a hinge structure corresponding to the third area being an in-fold structure:
in the first state, the 3-1th area is part of the first portion and is included in the bendable area that is unfolded, and
in the first state, the 3-2th area is part of the second portion and is included in the bendable area that is unfolded.

15. A non-transitory, computer-readable recording medium storing one or more programs, wherein the one or more programs include instructions that cause an electronic device, including a foldable housing including a first housing part, a second housing part, and a third housing part and a flexible display, to:
based on detecting a change from a folded state of the foldable housing to a partially unfolded state:
control a brightness of a first area of the flexible display to be a first brightness;
deactivate a second area which is at least a partial area of a second portion of the flexible display;
control a brightness of a third area disposed between the first area and the second area to be sequentially lowered from a first boundary between the first area and the third area to a second boundary between the third area and the second area, wherein the third area includes a 3-1th area extending from the first area and a 3-2th area extending from the 3-1th area to the second area;
as part of controlling the brightness of the third area to be sequentially lowered,
control, based on a first method, the brightness of the 3-1th area to be sequentially lowered from the first boundary to a third boundary between the 3-1th area and the 3-2th area; and
control, based on a second method different from the first method, the brightness of the 3-2th area to be sequentially lowered from the third boundary to the second boundary.
